# EUROPEAN PATENT APPLICATION

(11) **EP 4 716 357 A1**
(43) Date of publication of application: **25.03.2026**
(21) Application number: 24807116.9
(22) Date of filing: 09.05.2024
(51) Int. Cl.: H04W 76/10, H04L 12/66, H04L 45/02, H04L 45/741, H04W 76/12, H04W 92/24

(54) **SYSTEM, PGW, INFORMATION PROCESSING DEVICE, SMF, AND METHOD**

(30) Priority: 18.05.2023 JP 2023082580
(71) Applicant: Softbank Corp., Tokyo 105-7529 (JP); BBSakura Networks, Inc., Tokyo 160-0023 (JP)
(72) Inventor: SASAKI Hideyuki, Tokyo 105-7529 (JP); KUSAKABE Yuya, Tokyo 160-0023 (JP)
(74) Representative: Dilg, Haeusler, Schindelmann Patentanwaltsgesellschaft mbH
(86) International application number: PCT/JP2024/017238
(87) International publication number: WO 2024/237164

(57) **Abstract**

Provided is a system including: a first PGW; a second PGW which is located in a network having an ASN different from an ASN of a network in which the first PGW is located and to which an IP address identical to an IP address allocated to the first PGW is allocated; a first storage unit corresponding to the first PGW; and a second storage unit corresponding to the second PGW, wherein the first PGW includes: a request reception unit which receives, from an SGW, a session creation request by a communication terminal; a session information creation unit which, in response to the request reception unit receiving the session creation request, creates session information on the communication terminal; and a registration unit which registers, in the first storage unit, the session information, and wherein the system further includes a session information synchronization unit which synchronizes the session information between the first storage unit and the second storage unit.

## Description

### TECHNICAL FIELD

The present invention relates to a system, a PGW, an information processing device, an SMF, and a method.

### BACKGROUND ART

Patent Document 1 describes a communication system which reduces transmission delay with packets in international roaming. Patent Document 2 describes a communication system which reduces communication delay for roaming communication.

### RELATED ART DOCUMENTS

### PATENT DOCUMENTS:

Patent Document 1: WO 2014/049668
Patent Document 2: WO 2020/261458

### GENERAL DISCLOSURE

According to an embodiment of the present invention, a system is provided. The system may include a first PGW (Packet data network Gateway). The system may include a second PGW which is located in a network having an ASN (Autonomous System number) different from an ASN of a network in which the first PGW is located and to which an IP (Internet Protocol) address identical to an IP address allocated to the first PGW is allocated. The system may include a first storage unit corresponding to the first PGW. The system may include a second storage unit corresponding to the second PGW. The first PGW may include a request reception unit which receives, from an SGW (Serving Gateway), a session creation request by a communication terminal which requests to create a session with a PDN (Packet Data Network). The first PGW may include a session information creation unit which, in response to the request reception unit receiving the session creation request, creates session information on the communication terminal containing an IP address of the communication terminal, the IP address of the first PGW, TEIDs (Tunnel Endpoint IDentifiers) allocated to a communication tunnel for the first PGW and to a communication tunnel for the second PGW, an IP address of the SGW, and a TEID allocated to a communication tunnel for the SGW. The first PGW may include a registration unit which registers, in the first storage unit, the session information created by the session information creation unit. The system may further include a session information synchronization unit which synchronizes the session information registered in the first storage unit by the registration unit between the first storage unit and the second storage unit. The first PGW may further include a first communication tunnel establishment unit which, based on the session information which is synchronized between the first storage unit and the second storage unit by the session information synchronization unit and which is stored in the first storage unit, establishes a communication tunnel between the first PGW and the SGW in order to create the session for the communication terminal with the PDN. The second PGW may include a second communication tunnel establishment unit which, based on the session information which is synchronized between the second storage unit and the first storage unit by the session information synchronization unit and which is stored in the second storage unit, establishes a communication tunnel between the second PGW and the SGW in order to create the session for the communication terminal with the PDN.

In the system, the first PGW may be separated into a first PGW-C (PGW-Control plane function) and a first PGW-U (PGW-User plane function), and an IP address different from an IP address allocated to the first PGW-C may be allocated to the first PGW-U, wherein the second PGW may be separated into a second PGW-C and a second PGW-U, an IP address identical to the IP address allocated to the first PGW-C may be allocated to the second PGW-C, and an IP address identical to the IP address allocated to the first PGW-U may be allocated to the second PGW-U, wherein the IP address of the first PGW may include the IP address of the first PGW-C and the IP address of the first PGW-U, wherein the TEIDs allocated to the communication tunnel for the first PGW and to the communication tunnel for the second PGW may include TEIDs allocated to a communication tunnel for the first PGW-C and to a communication tunnel for the second PGW-C, and TEIDs which are allocated to a communication tunnel for the first PGW-U and to a communication tunnel for the second PGW-U and which are different from the TEIDs allocated to the communication tunnel for the first PGW-C and to the communication tunnel for the second PGW-C, wherein the IP address of the SGW separated into an SGW-C (SGW-Control plane function) and an SGW-U (SGW-User plane function) may include an IP address of the SGW-C and an IP address of the SGW-U different from the IP address of the SGW-C, wherein the TEID allocated to the communication tunnel for the SGW may include a TEID allocated to a communication tunnel for the SGW-C, and a TEID which is allocated to a communication tunnel for the SGW-U and which is different from the TEID allocated to the communication tunnel for the SGW-C, wherein the first communication tunnel establishment unit may establish the communication tunnel between the first PGW and the SGW by establishing a communication tunnel between the first PGW-C and the SGW-C and a communication tunnel between the first PGW-U and the SGW-U, and wherein the second communication tunnel establishment unit may establish the communication tunnel between the second PGW and the SGW by establishing a communication tunnel between the second PGW-C and the SGW-C and a communication tunnel between the second PGW-U and the SGW-U.

Any of the systems may further include: a selection unit which selects a route from the SGW to a PGW that is a transmission target of the session creation request according to a BGP (Border Gateway Protocol) best path selection algorithm; and a transmission unit which transmits the session creation request to the first PGW by following the route selected by the selection unit.

In any of the systems, the first PGW may be located in the network of a first country, and the second PGW may be located in the network of a second country different from the first country. In any of the systems, the registration unit may register the session information in the first storage unit located in the network in which the first PGW is located. In any of the systems, the first communication tunnel establishment unit may, in response to the session information synchronization unit synchronizing the session information between the first storage unit and the second storage unit, establish the communication tunnel between the first PGW and the SGW.

According to an embodiment of the present invention, a PGW is provided. The PGW may include a request reception unit which receives, from an SGW, a session creation request by a communication terminal which requests to create a session with a PDN. The PGW may include a session information creation unit which, in response to the request reception unit receiving the session creation request, creates session information on the communication terminal containing an IP address of the communication terminal, an IP address of the PGW, TEIDs allocated to a communication tunnel for the PGW and to a communication tunnel for another PGW which is located in a network having an ASN different from an ASN of a network in which the PGW is located and to which an IP address identical to the IP address of the PGW is allocated, an IP address of the SGW, and a TEID allocated to a communication tunnel for the SGW. The PGW may include a registration unit which registers, in a first storage unit corresponding to the PGW, the session information created by the session information creation unit. The PGW may include a session information synchronization unit which synchronizes the session information registered in the first storage unit by the registration unit between the first storage unit and a second storage unit corresponding to the another PGW. The PGW may include a communication tunnel establishment unit which, based on the session information which is synchronized between the first storage unit and the second storage unit by the session information synchronization unit and which is stored in the first storage unit, establishes a communication tunnel between the PGW and the SGW in order to create the session for the communication terminal with the PDN.

According to an embodiment of the present invention, an information processing device is provided. The information processing device may include a first storage unit corresponding to a first PGW, which stores session information on a communication terminal which requests to create a session with a PDN, containing an IP address of the communication terminal, an IP address of the first PGW, TEIDs allocated to a communication tunnel for the first PGW and to a communication tunnel for a second PGW which is located in a network having an ASN different from an ASN of a network in which the first PGW is located and to which an IP address identical to the IP address of the first PGW is allocated, an IP address of an SGW for which a communication tunnel to the first PGW is established, and a TEID allocated to a communication tunnel for the SGW. The information processing device may include a session information synchronization unit which synchronizes the session information stored in the first storage unit between the first storage unit and a second storage unit corresponding to the second PGW.

According to an embodiment of the present invention, a system is provided. The system may include a first SMF (Session Management Function). The system may include a first UPF (User Plane Function) located in a network in which the first SMF is located. The system may include a second SMF which is located in a network having an ASN different from an ASN of the network in which the first SMF is located. The system may include a second UPF which is located in the network in which the second SMF is located and to which an IP address identical to an IP address allocated to the first UPF is allocated. The system may include a first storage unit corresponding to the first UPF. The system may include a second storage unit corresponding to the second UPF. The first SMF may include a request reception unit which receives, from a third SMF, a session creation request by a communication terminal which requests to create a session with a PDN. The first SMF may include a session information creation unit which, in response to the request reception unit receiving the session creation request, creates session information on the communication terminal containing an IP address of the communication terminal, the IP address of the first UPF, TEIDs allocated to a communication tunnel for the first UPF and to a communication tunnel for the second UPF, an IP address of a third UPF located in a network in which the third SMF is located, and a TEID allocated to a communication tunnel for the third UPF. The first SMF may include a registration unit which registers, in the first storage unit, the session information created by the session information creation unit. The system may further include a session information synchronization unit which synchronizes the session information registered in the first storage unit by the registration unit between the first storage unit and the second storage unit. The first SMF may further include a first communication tunnel establishment unit which, based on the session information which is synchronized between the first storage unit and the second storage unit by the session information synchronization unit and which is stored in the first storage unit, causes the first UPF to establish a communication tunnel between the first UPF and the third UPF in order to create the session for the communication terminal with the PDN. The second SMF may include a second communication tunnel establishment unit which, based on the session information which is synchronized between the second storage unit and the first storage unit by the session information synchronization unit and which is stored in the second storage unit, causes the second UPF to establish a communication tunnel between the second UPF and the third UPF in order to create the session for the communication terminal with the PDN. In the system, the registration unit may register the session information in the first storage unit located in the network in which the first SMF and the first UPF are located. In any of the systems, the first communication tunnel establishment unit may, in response to the session information synchronization unit synchronizing the session information between the first storage unit and the second storage unit, cause the first UPF to establish the communication tunnel between the first UPF and the third UPF.

According to an embodiment of the present invention, an SMF is provided. The SMF may include a request reception unit which receives, from another SMF, a session creation request by a communication terminal which requests to create a session with a PDN. The SMF may include a session information creation unit which, in response to the request reception unit receiving the session creation request, creates session information on the communication terminal containing an IP address of the communication terminal, an IP address of a first UPF located in a network in which the SMF is located, TEIDs allocated to a communication tunnel for the first UPF and to a communication tunnel for a second UPF which is located in a network having an ASN different from an ASN of the network in which the SMF is located and to which an IP address identical to the IP address allocated to the first UPF is allocated, an IP address of a third UPF located in a network in which the another SMF is located, and a TEID allocated to a communication tunnel for the third UPF. The SMF may include a registration unit which registers, in a first storage unit corresponding to the first UPF, the session information created by the session information creation unit. The SMF may include a session information synchronization unit which synchronizes the session information registered in the first storage unit by the registration unit between the first storage unit and a second storage unit corresponding to the second UPF. The SMF may include a communication tunnel establishment unit which, based on the session information which is synchronized between the first storage unit and the second storage unit by the session information synchronization unit and which is stored in the first storage unit, causes the first UPF to establish a communication tunnel between the first UPF and the third UPF in order to create the session for the communication terminal with the PDN.

According to an embodiment of the present invention, an information processing device is provided. The information processing device may include a first storage unit corresponding to a first UPF, which stores session information on a communication terminal which requests to create a session with a PDN, containing an IP address of the communication terminal, an IP address of the first UPF, TEIDs allocated to a communication tunnel for the first UPF and to a communication tunnel for a second UPF which is located in a network having an ASN different from an ASN of a network in which the first UPF is located and to which an IP address identical to the IP address allocated to the first UPF is allocated, an IP address of a third UPF for which a communication tunnel to the first UPF is established, and a TEID allocated to a communication tunnel for the third UPF. The information processing device may include a session information synchronization unit which synchronizes the session information stored in the first storage unit between the first storage unit and a second storage unit corresponding to the second UPF.

According to an embodiment of the present invention, a method performed by a PGW is provided. The method may include receiving a request by receiving, from an SGW, a session creation request by a communication terminal which requests to create a session with a PDN. The method may include, in response to receiving the session creation request in the receiving the request, creating session information on the communication terminal containing an IP address of the communication terminal, an IP address of the PGW, TEIDs allocated to a communication tunnel for the PGW and to a communication tunnel for another PGW which is located in a network having an ASN different from an ASN of a network in which the PGW is located and to which an IP address identical to the IP address of the PGW is allocated, an IP address of the SGW, and a TEID allocated to a communication tunnel for the SGW. The method may include registering, in a first storage unit corresponding to the PGW, the session information created in the creating the session information. The method may include synchronizing the session information registered in the first storage unit in the registering between the first storage unit and a second storage unit corresponding to the another PGW. The method may include, based on the session information which is synchronized between the first storage unit and the second storage unit in the synchronizing the session information and which is stored in the first storage unit, establishing a communication tunnel between the PGW and the SGW in order to create the session for the communication terminal with the PDN.

According to an embodiment of the present invention, a method performed by a computer is provided. The method may include storing, in a first storage unit corresponding to a first PGW, session information on a communication terminal which requests to create a session with a PDN, containing an IP address of the communication terminal, an IP address of the first PGW, TEIDs allocated to a communication tunnel for the first PGW and to a communication tunnel for a second PGW which is located in a network having an ASN different from an ASN of a network in which the first PGW is located and to which an IP address identical to the IP address of the first PGW is allocated, an IP address of an SGW for which a communication tunnel to the first PGW is established, and a TEID allocated to a communication tunnel for the SGW. The method may include synchronizing the session information stored in the first storage unit in the storing, between the first storage unit and a second storage unit corresponding to the second PGW.

According to an embodiment of the present invention, a method performed by an SMF is provided. The method may include receiving a request by receiving, from another SMF, a session creation request by a communication terminal which requests to create a session with a PDN. The method may include, in response to receiving the session creation request in the receiving the request, creating session information on the communication terminal containing an IP address of the communication terminal, an IP address of a first UPF located in a network in which the SMF is located, TEIDs allocated to a communication tunnel for the first UPF and to a communication tunnel for a second UPF which is located in a network having an ASN different from an ASN of the network in which the SMF is located and to which an IP address identical to an IP address allocated to the first UPF is allocated, an IP address of a third UPF located in a network in which the another SMF is located, and a TEID allocated to a communication tunnel for the third UPF. The method may include registering, in a first storage unit corresponding to the first UPF, the session information created in the creating the session information. The method may include synchronizing the session information registered in the first storage unit in the registering, between the first storage unit and a second storage unit corresponding to the second UPF. The method may include, based on the session information which is synchronized between the first storage unit and the second storage unit in the synchronizing the session information and which is stored in the first storage unit, establishing a communication tunnel by causing the first UPF to establish a communication tunnel between the first UPF and the third UPF in order to create the session for the communication terminal with the PDN.

According to an embodiment of the present invention, a method performed by a computer is provided. The method may include storing, in a first storage unit corresponding to a first UPF, session information on a communication terminal which requests to create a session with a PDN, containing an IP address of the communication terminal, an IP address of the first UPF, TEIDs allocated to a communication tunnel for the first UPF and to a communication tunnel for a second UPF which is located in a network having an ASN different from an ASN of a network in which the first UPF is located and to which an IP address identical to the IP address allocated to the first UPF is allocated, an IP address of a third UPF for which a communication tunnel to the first UPF is established, and a TEID allocated to a communication tunnel for the third UPF. The method may include synchronizing the session information stored in the first storage unit in the storing, between the first storage unit and a second storage unit corresponding to the second UPF.

Note that the summary described above does not necessarily recite all necessary features of the present invention. A sub-combination of these features may also be the invention.

### BRIEF DESCRIPTION OF THE DRAWINGS

FIG. 1 schematically illustrates one example of a system 10.
FIG. 2 is a descriptive diagram for describing one example of a processing flow of the system 10.
FIG. 3 schematically illustrates one example of a functional configuration of a PGW 100.
FIG. 4 schematically illustrates one example of a functional configuration of an SGW 300.
FIG. 5 schematically illustrates one example of a functional configuration of a database 30.
FIG. 6 schematically illustrates another example of the system 10.
FIG. 7 is a descriptive diagram for describing another example of the processing flow of the system 10.
FIG. 8 schematically illustrates one example of a functional configuration of an H-SMF 420.
FIG. 9 schematically illustrates one example of a functional configuration of an H-UPF 440.
FIG. 10 schematically illustrates one example of a functional configuration of a V-SMF 620.
FIG. 11 schematically illustrates one example of a functional configuration of a V-UPF 640.
FIG. 12 schematically illustrates one example of a functional configuration of a database 70.
FIG. 13 schematically illustrates one example of a hardware configuration of a computer 1200 which functions as the PGW 100, the SGW 300, the database 30, the H-SMF 420, the H-UPF 440, the V-SMF 620, the V-UPF 640, or the database 70.

### DESCRIPTION OF EXEMPLARY EMBODIMENTS

When LTE (Long Term Evolution) communication occurs in a Home Routed scheme, a session is created between an SGW of a VPLMN (Visited Public Land Mobile Network) and a particular PGW of an HPLMN (Home Public Land Mobile Network) by establishing a GTP (GPRS Tunneling Protocol) tunnel between the SGW of the VPLMN and the PGW of the HPLMN. In this case, even if an HPLMN has been built in each of a plurality of sites, a session is not necessarily created between the SGW of the VPLMN and a PGW of an HPLMN that is geographically close to the VPLMN. A session can be created between the SGW of the VPLMN and a PGW of an HPLMN that is geographically distant from the VPLMN, and the SGW of the VPLMN can transmit GTP packets for a communication terminal to the PGW of the HPLMN that is geographically distant from the VPLMN, thereby causing a concern that a communication delay with the communication terminal would occur. In the system according to the present embodiment, for example, an identical IP address is allocated to individual PGWs in a plurality of HPLMNs that are geographically distinct by using IP Anycast, and the individual PGWs of the plurality of HPLMNs in question hold identical session information. Then, the individual PGWs of the plurality of HPLMNs in question each create a session with the SGW of the VPLMN by establishing a GTP tunnel to the SGW of the VPLMN based on the session information in question. Thereafter, a router corresponding to the SGW of the VPLMN selects, as a route from the SGW of the VPLMN to the PGW of the HPLMN that is a transfer target of the GTP packets for the communication terminal, a route having a shortest distance from the SGW of the VPLMN to the PGW of the HPLMN according to the BGP best path selection algorithm, and transfers the GTP packets for the communication terminal to the PGW of the HPLMN that is the transfer target in question by following the route thus selected.

Hereinafter, the present invention will be described through embodiments of the invention, but the following embodiments do not limit the invention according to the claims. In addition, not all of the combinations of features described in the embodiments are essential to the solving means of the invention.

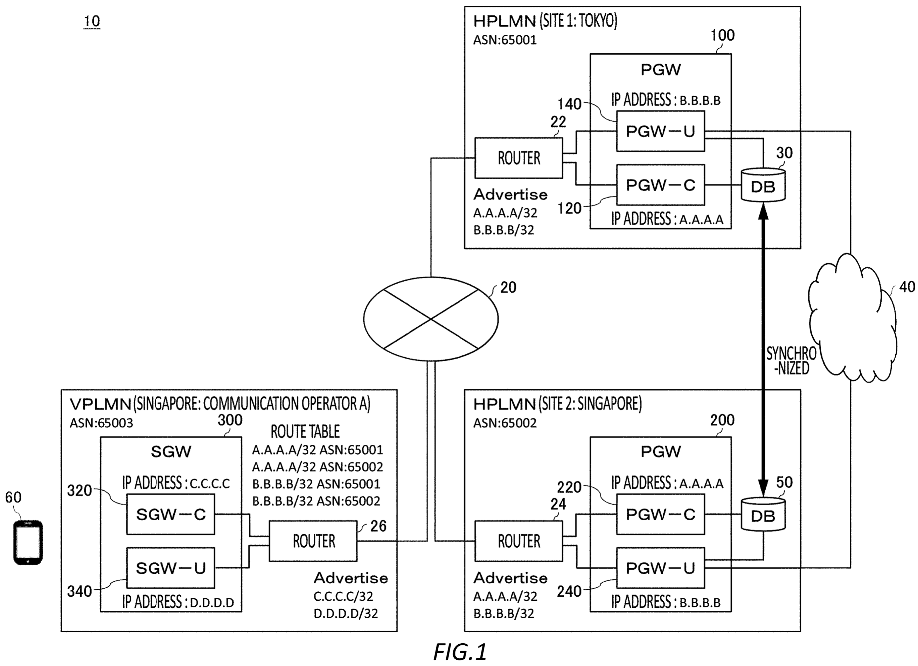

FIG. 1 schematically illustrates one example of a system 10. The system 10 offers a mobile communication service to a user of a communication terminal 60. For example, the system 10 offers a roaming service to the user of the communication terminal 60.

For example, the roaming service includes a domestic roaming service. For example, the roaming service includes an international roaming service.

The communication terminal 60 may be any communication terminal as long as it can utilize the mobile communication service offered by the system 10. For example, the communication terminal 60 is a cellular phone such as a smartphone, a tablet terminal, a wearable terminal, and the like.

For example, the mobile communication service offered by the system 10 is an LTE communication service. For example, the mobile communication service offered by the system 10 is a 5G (5th Generation) communication service. The mobile communication service offered by the system 10 may be a 6G (6th Generation) communication service. The mobile communication service offered by the system 10 may be a 3G (3rd Generation) communication service. In FIG. 1, one example of a case is illustrated where the mobile communication service offered by the system 10 is the LTE communication service.

The system 10 may include a PGW 100. The system 10 may include a router 22. The system 10 may include a database 30. The system 10 may include a PGW 200. The system 10 may include a router 24. The system 10 may include a database 50. The system 10 may include an SGW 300. The system 10 may include a router 26.

The PGW 100 has a function of relaying access to a PDN 40. For example, the PGW 100 is located in an HPLMN, which is a network of a communication operator who issued a SIM (Subscriber Identity Module) card to the user of the communication terminal 60.

For example, the PDN 40 includes the Internet. The PDN 40 may include any private network.

For example, the PGW 100 is located in a network of a first country. In one example illustrated in FIG. 1, the PGW 100 is located in a network of Tokyo, Japan, having an ASN of 65001.

For example, when a CUPS (Control and User Plane Separation) architecture is introduced to an LTE communication system, the PGW 100 is separated into a PGW-C 120 and a PGW-U 140. The PGW 100 may not be separated into the PGW-C 120 and the PGW-U 140.

An IP address may be allocated to the PGW 100. For example, when the PGW 100 is separated into the PGW-C 120 and the PGW-U 140, an IP address different from an IP address allocated to the PGW-C 120 is allocated to the PGW-U 140. In one example of the system 10 illustrated in FIG. 1, an IP address A.A.A.A with a subnet mask of 32 is allocated to the PGW-C 120, and B.B.B.B with the subnet mask of 32 is allocated to the PGW-U 140.

The PGW 200 has a function of relaying access to the PDN 40. For example, the PGW 200 has a function similar to that of the PGW 100.

For example, the PGW 200 is located in an HPLMN of the communication operator who issued the SIM card to the user of the communication terminal 60. Here, the description will be continued assuming that subscriber information on the user of the communication terminal 60, which is used to authenticate the user of the communication terminal 60 and which is recorded on the SIM card, such as an IMSI (International Mobile Subscriber Identity), an IMEI (International Mobile Equipment Identity), or the like, has been synchronized in advance between the HPLMN in which the PGW 100 is located and the HPLMN in which the PGW 200 is located.

For example, the PGW 200 is located in a network having an ASN different from the ASN of the network in which the PGW 100 is located. For example, the PGW 200 is located in a network of a second country different from the first country. In one example illustrated in FIG. 1, the PGW 200 is located in a network of Singapore having an ASN of 65002.

The PGW 200 may be located in a network of the first country. For example, when the PGW 100 is located in the network of Tokyo, Japan, the PGW 200 may be located in a network of Osaka, Japan.

For example, when the CUPS architecture is introduced to the LTE communication system, the PGW 200 is separated into a PGW-C 220 and a PGW-U 240. The PGW 200 may not be separated into the PGW-C 220 and the PGW-U 240.

An IP address may be allocated to the PGW 200. For example, an IP address identical to an IP address allocated to the PGW 100 is allocated to the PGW 200 by using IP Anycast.

For example, when the PGW 200 is separated into the PGW-C 220 and the PGW-U 240, an IP address different from an IP address allocated to the PGW-C 220 is allocated to the PGW-U 240. For example, an IP address identical to an IP address allocated to the PGW-C 120 is allocated to the PGW-C 220. For example, an IP address identical to an IP address allocated to the PGW-U 140 is allocated to the PGW-U 240. In one example of the system 10 illustrated in FIG. 1, the IP address A.A.A.A with the subnet mask of 32 is allocated to the PGW-C 220, and B.B.B.B with the subnet mask of 32 is allocated to the PGW-U 240.

The SGW 300 has a function of relaying access from a radio access network. For example, the SGW 300 is located in a VPLMN, which is a network of a communication operator at a place visited by the user of the communication terminal 60. The communication operator who issued the SIM card to the user of the communication terminal 60 may have been in a business partnership with the communication operator at the place visited by the user of the communication terminal 60 in advance. In one example illustrated in FIG. 1, the SGW 300 is located in a network of a communication operator A in Singapore having an ASN of 65003.

For example, when the CUPS architecture is introduced to the LTE communication system, the SGW 300 is separated into an SGW-C 320 and an SGW-U 340. The SGW 300 may not be separated into the SGW-C 320 and the SGW-U 340.

An IP address may be allocated to the SGW 300. For example, when the SGW 300 is separated into the SGW-C 320 and the SGW-U 340, an IP address different from an IP address allocated to the SGW-C 320 is allocated to the SGW-U 340. In one example of the system 10 illustrated in FIG. 1, an IP address C.C.C.C with the subnet mask of 32 is allocated to the SGW-C 320, and D.D.D.D with the subnet mask of 32 is allocated to the SGW-U 340.

The router 22 has a function of relaying data. For example, the router 22 relays uplink data. For example, the router 22 relays downlink data.

For example, the router 22 is located in the HPLMN in which the PGW 100 is located. The router 22 may be separated from the PGW 100, or may be integrated with the PGW 100.

The router 24 has a function of relaying data. The router 24 has a function similar to that of the router 22.

For example, the router 24 is located in the HPLMN in which the PGW 200 is located. The router 24 may be separated from the PGW 200, or may be integrated with the PGW 200.

The router 26 has a function of relaying data. For example, the router 26 relays uplink data. For example, the router 26 relays downlink data.

For example, the router 26 is located in the VPLMN in which the SGW 300 is located. The router 26 may be separated from the SGW 300, or may be integrated with the SGW 300.

For example, inter-organizational route information is exchanged among the router 22, the router 24, and the router 26 according to the BGP. For example, the route information is exchanged among the router 22, the router 24, and the router 26 in response to the route information being changed. The route information may be exchanged among the router 22, the router 24, and the router 26 periodically.

For example, the route information contains an ASN of a network in which a router is located. For example, the route information contains an IP address allocated to a device located in the network in question. The route information may contain a subnet mask of the IP address allocated to the device located in the network in question. For example, the subnet mask is expressed in prefix notation.

For example, the router 22 advertises the route information to the router 26. The router 22 may advertise the route information to an IPX (IP eXchange) which functions as a relay between the HPLMN and the VPLMN. The router 24 may advertise the route information in a manner similar to the router 22.

In one example of the system 10 illustrated in FIG. 1, the router 22 advertises the ASN = 65001, the IP address of the PGW-C 120 = A.A.A.A/32, and the IP address of the PGW-U 140 = B.B.B.B/32. Further, in one example of the system 10 illustrated in FIG. 1, the router 24 advertises the ASN = 65002, the IP address of the PGW-C 220 = A.A.A.A/32, and the IP address of the PGW-U 240 = B.B.B.B/32.

For example, the router 26 advertises the route information to the router 22 and the router 24. The router 22 may advertise the route information to the IPX. In one example of the system 10 illustrated in FIG. 1, the router 26 advertises the ASN = 65003, the IP address of the SGW-C 320 = C.C.C.C/32, and the IP address of the SGW-U 340 = D.D.D.D/32.

For example, the router 26 creates a route table. For example, the router 26 creates the route table based on the route information advertised by each of the router 22 and the router 24. For example, the router 26 creates the route table by associating an ASN of a network in which a router is located with an IP address allocated to a device located in the network in question. In one example of the system 10 illustrated in FIG. 1, the router 26 creates a route table containing the ASN = 65001 and the IP address of the PGW-C 120 = A.A.A.A/32; the ASN = 65001 and the IP address of the PGW-U 140 = B.B.B.B/32; the ASN = 65002 and the IP address of the PGW-C 220 = A.A.A.A/32; and the ASN = 65002 and the IP address of the PGW-U 240 = B.B.B.B/32.

For example, the SGW 300 receives a session creation request by the communication terminal 60 of the user who has visited the VPLMN in which the SGW 300 is located, for requesting to create a session with the PDN 40. For example, the session creation request contains an IP address of the communication terminal 60. For example, the session creation request contains the IMSI of the communication terminal 60. For example, the session creation request contains the IP address of the SGW 300. For example, when the SGW 300 is separated into the SGW-C 320 and the SGW-U 340, the IP address of the SGW 300 includes the IP address of the SGW-C 320 and the IP address of the SGW-U 340. For example, the session creation request contains a TEID allocated to a communication tunnel for the SGW 300. For example, when the SGW 300 is separated into the SGW-C 320 and the SGW-U 340, the TEID allocated to the communication tunnel for the SGW 300 includes a TEID allocated to a communication tunnel for the SGW-C 320 and a TEID which is allocated to a communication tunnel for the SGW-U 340 and which is different from the TEID allocated to the communication tunnel for the SGW-C 320. When the SGW 300 is not separated into the SGW-C 320 and the SGW-U 340, a TEID allocated to a communication tunnel for a U-Plane (User-Plane) function of the SGW 300 may be identical to or different from a TEID allocated to a communication tunnel for a C-Plane (Control-Plane) function of the SGW 300. For example, the session creation request contains the IP address of the PGW 100. For example, when the PGW 100 is separated into the PGW-C 120 and the PGW-U 140, the IP address of the PGW 100 includes the IP address of the PGW-C 120 and the IP address of the PGW-U 140. The session creation request may contain any other information for creating the session for the communication terminal 60 with the PDN 40.

The SGW 300 may transmit, to the router 26, the session creation request by the communication terminal 60 thus received. The router 26 may select a route from the SGW 300 to a PGW of an HPLMN that is a transmission target of the session creation request by the communication terminal 60. For example, the router 26 selects the route from the SGW 300 to the PGW of the HPLMN that is the transmission target of the session creation request by the communication terminal 60, by selecting a route from the router 26 to reach a router corresponding to the PGW of the HPLMN that is the transmission target of the session creation request by the communication terminal 60.

For example, the router 26, based on the IP address of the PGW 100 contained in the session creation request by the communication terminal 60, selects the route from the SGW 300 to the PGW of the HPLMN that is the transmission target of the session creation request by the communication terminal 60. For example, when there are a plurality of PGWs of HPLMNs to each of which an IP address identical to the IP address of the PGW 100 is allocated, then the router 26, based on the route table thus created, selects one route among routes from the SGW 300 to each of the plurality of PGWs of the HPLMNs to each of which the IP address identical to the IP address of the PGW 100 is allocated, as the route from the SGW 300 to the PGW of the HPLMN that is the transmission target of the session creation request by the communication terminal 60, according to the BGP best path selection algorithm. For example, the router 26 selects a route having a shortest distance from the SGW 300, as the route from the SGW 300 to the PGW of the HPLMN that is the transmission target of the session creation request by the communication terminal 60.

In one example of the system 10 illustrated in FIG. 1, when the SGW 300 is able to transmit the session creation request by the communication terminal 60 to both of the PGW 100 and the PGW 200, the router 26 selects a route from the router 26 via a network 20 to reach the router 24 as the route from the SGW 300 to the PGW of the HPLMN that is the transmission target of the session creation request by the communication terminal 60, because a distance of the route from the router 26 via the network 20 to reach the router 24 is shorter than a distance of a route from the router 26 via the network 20 to reach the router 22. In contrast, in one example of the system 10 illustrated in FIG. 1, when the SGW 300 is able to transmit the session creation request by the communication terminal 60 only to the PGW 100, such as when a failure occurs in the PGW 200, when the PGW 200 is under maintenance, or the like, then the router 26 selects the route from the router 26 via the network 20 to reach the router 22, as the route from the SGW 300 to the PGW of the HPLMN that is the transmission target of the session creation request by the communication terminal 60. Here, the description will be continued assuming that the router 26 has selected the route from the router 26 via the network 20 to reach the router 24.

The router 26 may transmit the session creation request via the network 20 to the router 24. The router 24 may transmit, to the PGW 200, the session creation request thus received. The PGW 200 may be one example of a first PGW.

The PGW 200 may, in response to receiving the session creation request from the SGW 300, create session information on the communication terminal 60. For example, the session information contains the IP address of the communication terminal 60. For example, the session information contains the IMSI of the communication terminal 60. For example, the session information contains the IP address of the PGW 200. For example, the session information contains TEIDs allocated to a communication tunnel for the PGW 200 and to a communication tunnel for the PGW 100. For example, when the PGWs are each separated into the PGW-C and the PGW-U, the TEIDs allocated to the communication tunnel for the PGW 200 and to the communication tunnel for the PGW 100 include TEIDs allocated to a communication tunnel for the PGW-C 220 and to a communication tunnel for the PGW-C 120; and TEIDs which are allocated to a communication tunnel for the PGW-U 240 and to a communication tunnel for the PGW-U 140 and which are different from the TEIDs allocated to the communication tunnel for the PGW-C 220 and to the communication tunnel for the PGW-C 120. When the PGWs are each not separated into the PGW-C and the PGW-U, TEIDs allocated to a communication tunnel for a U-Plane function of the PGW 200 and to a communication tunnel for a U-Plane function of the PGW 100 may be identical to or different from TEIDs allocated to a communication tunnel for a C-Plane function of the PGW 200 and to a communication tunnel for a C-Plane function of the PGW 100. For example, the session information contains the IP address of the SGW 300. For example, the session information contains the TEID allocated to the communication tunnel for the SGW 300. The session information may contain any other information for creating the session for the communication terminal 60 with the PDN 40.

The PGW 200 may register, in the database 50 corresponding to the PGW 200, the session information on the communication terminal 60 thus created. For example, the PGW 200 may have stored an IP address of the database 50 in advance.

For example, the database 50 contains a message queue for temporarily storing the session information on the communication terminal 60. The database 50 may be one example of a first storage unit.

The database 50 may be separated from the PGW 200. The database 50 may be integrated with the PGW 200.

The database 50 may synchronize the session information on the communication terminal 60 between the database 50 and the database 30 corresponding to the PGW 100. The PGW 100 may be one example of a second PGW. The database 50 may be one example of a session information synchronization unit. The database 30 may be one example of a second storage unit.

For example, the database 50 synchronizes the session information on the communication terminal 60 between the database 50 and the database 30 by using a Pub/Sub (Publish/Subscribe) scheme. In this case, the database 50 may be a publisher, and the database 30 may be a subscriber.

For example, the database 50 transmits a message containing the session information on the communication terminal 60 to a topic. The database 30 acquires the session information on the communication terminal 60 by receiving the message from a subscription corresponding to the topic to which the message has been transmitted by the database 50. In this way, the session information on the communication terminal 60 is synchronized between the database 50 and the database 30.

The database 50 may, in response to synchronizing the session information on the communication terminal 60 between the database 50 and the database 30, notify the PGW 200 of a session information notification containing the session information on the communication terminal 60 synchronized between the database 50 and the database 30. The database 50 may have stored the IP address of the PGW 200 in advance.

The database 30 may, in response to the session information on the communication terminal 60 being synchronized between the database 30 and the database 50 by the database 50, notify the PGW 100 of the session information notification. Accordingly, the PGW 200 may be the publisher, and the PGW 100 may be the subscriber. The database 30 may have stored the IP address of the PGW 100 in advance.

The PGW 200 may, in response to being notified of the session information notification from the database 50, establish a communication tunnel between the PGW 200 and the SGW 300 in order to create the session for the communication terminal 60 with the PDN 40. For example, the PGW 200, based on the session information on the communication terminal 60, which is contained in the session information notification and which is synchronized between the database 50 and the database 30, establishes the communication tunnel between the PGW 200 and the SGW 300.

The PGW 100 may, in response to being notified of the session information notification from the database 30, establish a communication tunnel between the PGW 100 and the SGW 300 in order to create the session for the communication terminal 60 with the PDN 40. For example, the PGW 100, based on the session information on the communication terminal 60, which is contained in the session information notification and which is synchronized between the database 30 and the database 50, establishes the communication tunnel between the PGW 100 and the SGW 300.

The PGW 200 may, in response to the communication tunnel between the PGW 200 and the SGW 300 being established, transmit a session creation response for the communication terminal 60 to the SGW 300. Once the PGW 200 transmits the session creation response for the communication terminal 60 to the SGW 300, the session for the communication terminal 60 with the PDN 40 via the SGW 300 and the PGW 200 is created.

For example, the session creation response contains the IP address of the PGW 200. For example, the session creation response contains the TEIDs allocated to the communication tunnel for the PGW 200 and to the communication tunnel for the PGW 100. The session creation response may contain any other information for creating the session for the communication terminal 60 with the PDN 40.

The PGW 100 may, in response to the communication tunnel between the PGW 100 and the SGW 300 being established, transmit the session creation response for the communication terminal 60 to the SGW 300. Once the PGW 100 transmits the session creation response for the communication terminal 60 to the SGW 300, the session for the communication terminal 60 with the PDN 40 via the SGW 300 and the PGW 100 is created.

For example, the SGW 300 receives uplink data from the communication terminal 60. The SGW 300 may transmit, to the router 26, the uplink data from the communication terminal 60 thus received.

The router 26 selects a route from the SGW 300 to a PGW of an HPLMN that is a transmission target of the uplink data from the communication terminal 60. For example, the router 26 selects the route from the SGW 300 to the PGW of the HPLMN that is the transmission target of the uplink data from the communication terminal 60, among PGWs of HPLMNs for each of which a session is created with the SGW 300. For example, when there are a plurality of PGWs of HPLMNs for each of which a session is created with the SGW 300, then the router 26, based on the route table thus created, selects one route among routes to each of the plurality of PGWs of the HPLMNs for each of which the session is created with the SGW 300, as the route from the SGW 300 to the PGW of the HPLMN that is the transmission target of the uplink data from the communication terminal 60, according to the BGP best path selection algorithm. For example, the router 26 selects a route having a shortest distance from the SGW 300, as the route from the SGW 300 to the PGW of the HPLMN that is the transmission target of the uplink data from the communication terminal 60.

In one example of the system 10 illustrated in FIG. 1, when the SGW 300 is able to transmit the uplink data from the communication terminal 60 to both of the PGW 100 and the PGW 200, the router 26 selects a route from the router 26 via the network 20 to reach the router 24 as the route from the SGW 300 to the PGW of the HPLMN that is the transmission target of the uplink data from the communication terminal 60. In this case, the router 26 transmits the uplink data from the communication terminal 60 via the network 20 to the router 24. The router 24 transmits, to the PGW 200, the uplink data from the communication terminal 60 thus received. The PGW 200 transmits, to the PDN 40, the uplink data from the communication terminal 60 thus received.

In contrast, in one example of the system 10 illustrated in FIG. 1, when the SGW 300 is able to transmit the uplink data from the communication terminal 60 only to the PGW 100, such as when a failure occurs in the PGW 200, when the PGW 200 is under maintenance, or the like, then the router 26 selects a route from the router 26 via the network 20 to reach the router 22, as the route from the SGW 300 to the PGW of the HPLMN that is the transmission target of the uplink data from the communication terminal 60. In this case, the router 26 transmits the uplink data from the communication terminal 60 via the network 20 to the router 22. The router 22 transmits, to the PGW 100, the uplink data from the communication terminal 60 thus received. The PGW 100 transmits, to the PDN 40, the uplink data from the communication terminal 60 thus received.

In one example of the system 10 illustrated in FIG. 1, when the uplink data from the communication terminal 60 is transmitted via the SGW 300 and the PGW 200 to the PDN 40, the uplink data from the communication terminal 60 is transmitted to the PDN 40 through domestic roaming. In contrast, in one example of the system 10 illustrated in FIG. 1, when the uplink data from the communication terminal 60 is transmitted via the SGW 300 and the PGW 100 to the PDN 40, the uplink data from the communication terminal 60 is transmitted to the PDN 40 through international roaming.

The database 30 may have a function similar to that of the database 50. For example, when the PGW 100 has registered the session information on the communication terminal 60 in the database 30, the database 30 synchronizes the session information on the communication terminal 60 between the database 30 and the database 50 in a manner similar to the database 50.

In one example of the system 10 illustrated in FIG. 1, the communication operator who issued the SIM card to the user of the communication terminal 60 may build an HPLMN for each of three or more sites. In this case, an identical IP address may be allocated to a PGW in each site of the three or more sites.

Conventionally, by using IP Unicast, a different IP address has been allocated to each of PGWs of HPLMNs built in a plurality of sites by a communication operator who offers a roaming service. Therefore, when a session is created between an SGW of a VPLMN and a PGW of an HPLMN, an MME (Mobility Management Entity) corresponding to the SGW of the VPLMN has had to select one PGW among the individual PGWs of the plurality of HPLMNs each having a different IP address. As a result, when the MME corresponding to the SGW of the VPLMN selects a PGW of an HPLMN that is far distant from the SGW of the VPLMN and a session between the SGW of the VPLMN and the PGW of the HPLMN thus selected is created, there has been a concern that a communication delay with a communication terminal would occur. In particular, in a situation where there are a PGW of an HPLMN of a first country and a PGW of an HPLMN of a second country different from the first country, and when an MME corresponding to an SGW of a VPLMN of the second country selects the PGW of the HPLMN of the first country, then the concern that the communication delay with the communication terminal would occur rises even higher than when the MME corresponding to the SGW of the VPLMN selects the PGW of the HPLMN of the second country, because international communication is needed, which would be unnecessary if the SGW of the VPLMN selected the PGW of the HPLMN of the second country.

In order to avoid the occurrence of the communication delay, it is contemplated that an identical IP address is allocated to each of the PGWs of the plurality of HPLMNs by using IP Anycast. However, just simply allocating the identical IP address to each of the PGWs of the plurality of HPLMNs does not allow a PGW of an HPLMN that has not received any session creation request by the communication terminal from the SGW of the VPLMN to acquire session information on the communication terminal, so any session cannot be created between the SGW of the VPLMN and the PGW of the HPLMN that has not received any session creation request by the communication terminal.

As opposed to this, according to the system 10 illustrated in FIG. 1, a PGW of an HPLMN that has received a session creation request by the communication terminal 60 from the SGW 300 and has created session information on the communication terminal 60 registers, in a database corresponding to the PGW in question, the session information on the communication terminal 60 thus created. Thereafter, the session information on the communication terminal 60 registered in the database in question is synchronized between the database in question and a database corresponding to a PGW of an HPLMN to which an IP address identical to that of the PGW in question is allocated. In this way, the PGW of the HPLMN to which the IP address identical to that of the PGW of the HPLMN that has received the session creation request by the communication terminal 60 from the SGW 300 is allocated can acquire the session information on the communication terminal 60 without receiving any session creation request by the communication terminal 60 from the SGW 300, so in LTE communication, the system 10 illustrated in FIG. 1 can create a session between the SGW 300 and each of PGWs of a plurality of HPLMNs to which an identical IP address is allocated. Then, the router 26 selects one route among routes to each of the plurality of PGWs of the HPLMNs for each of which a session with the SGW 300 is created, as a route from the SGW 300 to a PGW of an HPLMN that is a transmission target of uplink data from the communication terminal 60, according to the BGP best path selection algorithm. In this way, the router 26 can preferentially select a route having a short distance from the SGW 300, so in the LTE communication, the system 10 illustrated in FIG. 1 can suppress the occurrence of the communication delay with the communication terminal 60. In addition, by creating a session between the SGW 300 and each of the PGWs of the plurality of HPLMNs to which an identical IP address is allocated, even when a failure occurs at one PGW among the individual PGWs of the plurality of HPLMNs in question, when the one PGW in question is under maintenance, or the like, the router 26 can select a route different from a route from the SGW 300 to the one PGW in question as the route from the SGW 300 to the PGW of the HPLMN that is the transmission target of the uplink data from the communication terminal 60. In this way, in the LTE communication, the system 10 illustrated in FIG. 1 can offer a mobile communication service having higher communication redundancy than that in a system where a different IP address is allocated to each of PGWs of a plurality of HPLMNs.

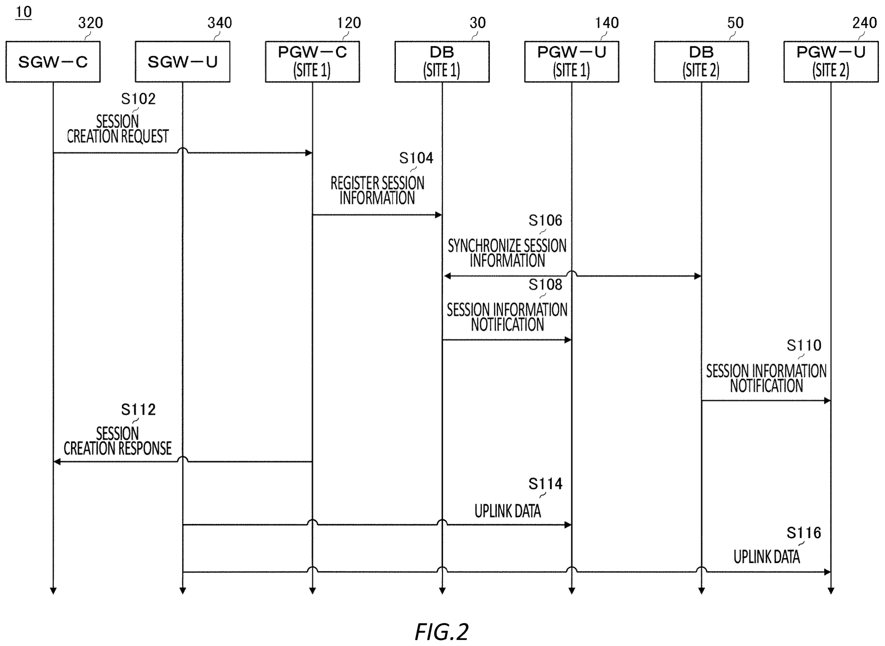

FIG. 2 is a descriptive diagram for describing one example of a processing flow of the system 10. Here, the description will follow assuming that a state where the user of the communication terminal 60 has visited the VPLMN in which the SGW 300 is located is an initial state.

In Step 102 (the term "Step" may be abbreviated as "S"), the SGW-C 320 transmits a session creation request by communication terminal 60 which requests to create a session with the PDN 40. For example, the SGW-C 320 transmits the session creation request by the communication terminal 60 received from an MME corresponding to the SGW 300, which has accepted an attach request from the communication terminal 60 to execute authentication processing on the communication terminal 60. Here, the description will be continued assuming that the router 26 selects a route from the SGW 300 illustrated in FIG. 1 to the PGW 100 in a site 1 and that the SGW-C 320 transmits the session creation request by the communication terminal 60 to the PGW-C 120.

The PGW-C 120 receives, from the SGW-C 320, the session creation request by the communication terminal 60. The PGW-C 120 may, based on the session creation request by the communication terminal 60 thus received, create session information on the communication terminal 60.

In S104, the PGW-C 120 registers, in the database 30 corresponding to the PGW 100, the session information on the communication terminal 60 thus created. In S106, the database 30 synchronizes the session information on the communication terminal 60 registered by the PGW-C 120 in S104 between the database 30 and the database 50 corresponding to the PGW 200 of the HPLMN in a site 2 illustrated in FIG. 1.

The database 30 may, in response to synchronizing the session information on the communication terminal 60 between the database 30 and the database 50, notify the PGW-C 120 of a synchronization completion notification for notifying it that synchronization of the session information on the communication terminal 60 has completed. For example, the synchronization completion notification contains the session information on the communication terminal 60 synchronized between the database 30 and the database 50. The database 50 may, in response to the session information on the communication terminal 60 being synchronized between the database 50 and the database 30 by the database 30, notify the PGW-C 220 of the synchronization completion notification.

In S108, the database 30, in response to synchronizing the session information on the communication terminal 60 between the database 30 and the database 50 in S106, notifies the PGW-U 140 of a session information notification. The PGW-C 120 may, in response to being notified of the synchronization completion notification from the database 30, cause the PGW-U 140 to establish a communication tunnel between the PGW-U 140 and the SGW-U 340 in order to create the session for the communication terminal 60 with the PDN 40. For example, the PGW-C 120 may cause the PGW-U 140 to establish the communication tunnel between the PGW-U 140 and the SGW-U 340 by transmitting, to the PGW-U 140, a communication tunnel establishment request for requesting to establish the communication tunnel to the SGW-U 340.

The PGW-U 140 may, in response to receiving the communication tunnel establishment request from the PGW-C 120, establish the communication tunnel between the PGW-U 140 and the SGW-U 340 based on the session information on the communication terminal 60, which is contained in the session information notification notified from the database 30 and which is synchronized between the database 30 and the database 50. For example, the PGW-U 140 executes setting processing for processing uplink data from the communication terminal 60 in order to establish the communication tunnel between the PGW-U 140 and the SGW-U 340. For example, the PGW-U 140 executes setting processing for processing downlink data to the communication terminal 60 in order to establish the communication tunnel between the PGW-U 140 and the SGW-U 340. The PGW-U 140 may, in response to establishing the communication tunnel between the PGW-U 140 and the SGW-U 340, transmit a communication tunnel establishment response to the PGW-C 120.

The PGW-C 120 may, in response to being notified of the synchronization completion notification from the database 30, establish a communication tunnel between the PGW-C 120 and the SGW-C 320 in order to create the session for the communication terminal 60 with the PDN 40. The PGW-C 120, based on the session information on the communication terminal 60, which is contained in the synchronization completion notification notified from the database 30 and which is synchronized between the database 30 and the database 50, establishes the communication tunnel between the PGW-C 120 and the SGW-C 320.

In S110, the database 50, in response to the session information on the communication terminal 60 being synchronized between the database 50 and the database 30 by the database 30 in S106, notifies the PGW-U 240 of the session information notification. The PGW-C 220 may, in response to being notified of the synchronization completion notification from the database 50, cause the PGW-U 240 to establish a communication tunnel between the PGW-U 240 and the SGW-U 340 in order to create the session for the communication terminal 60 with the PDN 40. For example, the PGW-C 220 may cause the PGW-U 240 to establish the communication tunnel between the PGW-U 240 and the SGW-U 340 by transmitting a communication tunnel establishment request to the PGW-U 240.

The PGW-U 240 may, in response to receiving the communication tunnel establishment request from the PGW-C 220, establish the communication tunnel between the PGW-U 240 and the SGW-U 340 based on the session information on the communication terminal 60, which is contained in the session information notification notified from the database 50 and which is synchronized between the database 50 and the database 30. The PGW-U 240 may establish the communication tunnel between the PGW-U 240 and the SGW-U 340 in a manner similar to when the PGW-U 140 establishes the communication tunnel between the PGW-U 140 and the SGW-U 340. The PGW-U 240 may, in response to establishing the communication tunnel between the PGW-U 240 and the SGW-U 340, transmit a communication tunnel establishment response to the PGW-C 220.

The PGW-C 220 may, in response to being notified of the synchronization completion notification from the database 50, establish a communication tunnel between the PGW-C 220 and the SGW-C 320 in order to create the session for the communication terminal 60 with the PDN 40. For example, the PGW-C 220, based on the session information on the communication terminal 60, which is contained in the synchronization completion notification notified from the database 50 and which is synchronized between the database 50 and the database 30, establishes the communication tunnel between the PGW-C 220 and the SGW-C 320.

In S112, the PGW-C 120 transmits a session creation response for the communication terminal 60 to the SGW-C 320. For example, the PGW-C 120, in response to receiving the communication tunnel establishment response from the PGW-U 140, transmits the session creation response for the communication terminal 60 to the SGW-C 320. For example, the PGW-C 120, in response to receiving the communication tunnel establishment response from the PGW-U 140 and establishing the communication tunnel between the PGW-C 120 and the SGW-C 320, transmits the session creation response for the communication terminal 60 to the SGW-C 320.

The PGW-C 220 transmits a session creation response for the communication terminal 60 to the SGW-C 320. The PGW-C 220 may transmit the session creation response for the communication terminal 60 to the SGW-C 320 in a manner similar to the PGW-C 120.

In S114, when the router 26 selects a route from the SGW 300 illustrated in FIG. 1 to the PGW 100 in the site 1 as a route from the SGW 300 to a PGW of an HPLMN that is a transmission target of the uplink data from the communication terminal 60, then the SGW-U 340 transmits the uplink data from the communication terminal 60 to the PGW-U 140. In S116, when the router 26 selects a route from the SGW 300 illustrated in FIG. 1 to the PGW 200 in the site 2 as the route from the SGW 300 to the PGW of the HPLMN that is the transmission target of the uplink data from the communication terminal 60, then the SGW-U 340 transmits the uplink data from the communication terminal 60 to the PGW-U 240.

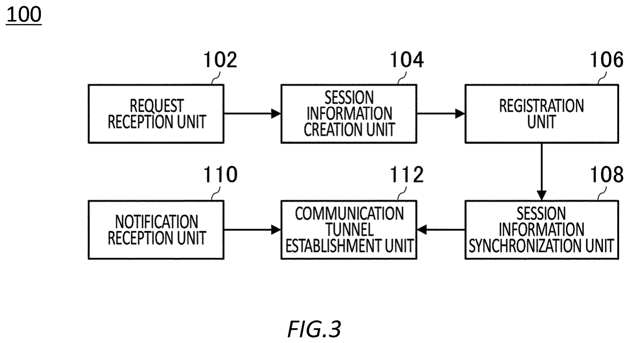

FIG. 3 schematically illustrates one example of a functional configuration of the PGW 100. The PGW 100 includes a request reception unit 102, a session information creation unit 104, a registration unit 106, a session information synchronization unit 108, a notification reception unit 110, and a communication tunnel establishment unit 112. Note that the PGW 100 does not necessarily include all of these constituents.

The request reception unit 102 receives, from the SGW 300, a session creation request by the communication terminal 60 which requests to create a session with the PDN 40. For example, the request reception unit 102 receives the session creation request by the communication terminal 60 from the SGW 300 via the network 20 and the router 22.

For example, the request reception unit 102 receives, from the SGW 300 located in a country in which the PGW 100 is located, the session creation request by the communication terminal 60. For example, the request reception unit 102 receives, from the SGW 300 located in a country different from the country in which the PGW 100 is located, the session creation request by the communication terminal 60.

The session information creation unit 104 creates session information on the communication terminal 60. For example, the session information creation unit 104, in response to the request reception unit 102 receiving the session creation request by the communication terminal 60, creates the session information on the communication terminal 60. For example, the session information creation unit 104, based on the session creation request by the communication terminal 60, creates the session information on the communication terminal 60.

The registration unit 106 registers, in the database 30 corresponding to the PGW 100, the session information on the communication terminal 60 created by the session information creation unit 104. For example, the registration unit 106 registers, in the database 30 located in a network in which the PGW 100 is located, the session information on the communication terminal 60. The registration unit 106 may register, in the database 30 located in a network having an ASN different from an ASN of the network in which the PGW 100 is located, the session information on the communication terminal 60.

The session information synchronization unit 108 synchronizes the session information on the communication terminal 60 registered in the database 30 by the registration unit 106 between the database 30 and the database 50 corresponding to the PGW 200. For example, the session information synchronization unit 108 synchronizes the session information on the communication terminal 60 between the database 30 and the database 50 by using a Pub/Sub scheme. The session information synchronization unit 108 may synchronize the session information on the communication terminal 60 between the database 30 and the database 50 through any other scheme. The session information synchronization unit 108 may, in response to synchronizing the session information on the communication terminal 60 between the database 30 and the database 50, notify the PGW 200 of a synchronization completion notification.

The notification reception unit 110 receives a notification. For example, the notification reception unit 110 receives the notification via the network 20 and the router 22. The notification reception unit 110 may receive the notification via the PDN 40.

For example, the notification reception unit 110 receives the notification from the database 30. For example, the notification reception unit 110 receives the notification from the database 50. The notification reception unit 110 may receive the notification from the PGW 200.

For example, the notification reception unit 110 receives a synchronization completion notification. For example, the notification reception unit 110 receives a session information notification.

The communication tunnel establishment unit 112 establishes a communication tunnel between the PGW 100 and the SGW 300 in order to create a session for the communication terminal 60 with the PDN 40. For example, the communication tunnel establishment unit 112, in response to the session information synchronization unit 108 synchronizing the session information on the communication terminal 60 between the database 30 and the database 50, establishes the communication tunnel between the PGW 100 and the SGW 300. The communication tunnel establishment unit 112 may, in response to the notification reception unit 110 receiving the synchronization completion notification, establish the communication tunnel between the PGW 100 and the SGW 300.

For example, when the PGW 100 is separated into the PGW-C 120 and the PGW-U 140 and the SGW 300 is separated into the SGW-C 320 and the SGW-U 340, then the communication tunnel establishment unit 112 establishes the communication tunnel between the PGW 100 and the SGW 300 by establishing a communication tunnel between the PGW-C 120 and the SGW-C 320 and a communication tunnel between the PGW-U 140 and the SGW-C 320.

For example, the communication tunnel establishment unit 112 establishes a GTP tunnel between the PGW 100 and the SGW 300. The communication tunnel establishment unit 112 may establish any other communication tunnel between the PGW 100 and the SGW 300.

For example, the communication tunnel establishment unit 112, based on the session information on the communication terminal 60, which is synchronized between the database 30 and the database 50 and which is stored in the database 30, establishes the communication tunnel between the PGW 100 and the SGW 300. For example, the communication tunnel establishment unit 112, based on the session information on the communication terminal 60 synchronized between the database 30 and the database 50 by the session information synchronization unit 108, establishes the communication tunnel between the PGW 100 and the SGW 300. For example, the communication tunnel establishment unit 112, based on the session information on the communication terminal 60 synchronized between the database 30 and the database 50 by the PGW 200, establishes the communication tunnel between the PGW 100 and the SGW 300. For example, the communication tunnel establishment unit 112, based on the session information on the communication terminal 60 synchronized between the database 30 and the database 50 by the database 30, establishes the communication tunnel between the PGW 100 and the SGW 300. The communication tunnel establishment unit 112 may, based on the session information on the communication terminal 60 synchronized between the database 30 and the database 50 by the database 50, establish the communication tunnel between the PGW 100 and the SGW 300.

For example, the communication tunnel establishment unit 112, based on the session information on the communication terminal 60, which is contained in the session information notification received by the notification reception unit 110 and which is synchronized between the database 30 and the database 50, establishes the communication tunnel between the PGW 100 and the SGW 300. For example, the communication tunnel establishment unit 112, based on the session information on the communication terminal 60, which is contained in the synchronization completion notification received by the notification reception unit 110 and which is synchronized between the database 30 and the database 50, establishes the communication tunnel between the PGW 100 and the SGW 300. The communication tunnel establishment unit 112 may, based on the session information on the communication terminal 60, which has been acquired by accessing the database 30 and which is synchronized between the database 30 and the database 50, establish the communication tunnel between the PGW 100 and the SGW 300.

The communication tunnel establishment unit 112 may, in response to establishing the communication tunnel between the PGW 100 and the SGW 300, transmit the session creation response for the communication terminal 60 to the SGW 300. For example, the communication tunnel establishment unit 112 transmits the session creation response for the communication terminal 60 via the network 20 and the router 22 to the SGW 300.

The communication tunnel establishment unit 112 may set a QoS (Quality of Service) of the communication tunnel between the PGW 100 and the SGW 300. For example, the communication tunnel establishment unit 112 sets the QoS of the communication tunnel between the PGW 100 and the SGW 300 by receiving QoS setting information for setting the QoS of the communication tunnel between the PGW 100 and the SGW 300 from a PCRF (Policy and Charging Rules Function) corresponding to the PGW 100.

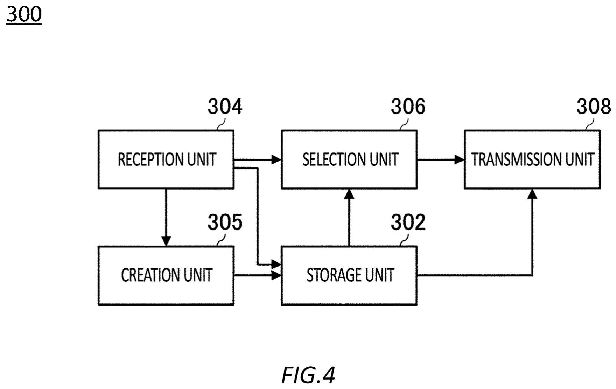

FIG. 4 schematically illustrates one example of a functional configuration of the SGW 300. The SGW 300 includes a storage unit 302, a reception unit 304, a creation unit 305, a selection unit 306, and a transmission unit 308. Note that the SGW 300 does not necessarily include all of these constituents.

The storage unit 302 stores various types of information. For example, the storage unit 302 stores a route table.

For example, the route table contains route information between the SGW 300 and the PGW 100. For example, the route table contains route information between the SGW 300 and the PGW 200.

The reception unit 304 receives various types of information. For example, the reception unit 304 receives the various types of information via the network 20 and the router 26. The reception unit 304 may receive the various types of information via a radio access network. The reception unit 304 may store, in the storage unit 302, the various types of information thus received.

For example, the reception unit 304 receives route information advertised by the router 22. For example, the reception unit 304 receives route information advertised by the router 24. The reception unit 304 may receive route information advertised by the IPX.

For example, the reception unit 304 receives the route information between the SGW 300 and the PGW 100. For example, the reception unit 304 receives the route information between the SGW 300 and the PGW 200.

The creation unit 305 creates a route table. For example, the creation unit 305 creates the route table based on the route information received by the reception unit 304. The creation unit 305 may store, in the storage unit 302, the route table thus created.

For example, the reception unit 304 receives a session creation request by the communication terminal 60. For example, the reception unit 304 receives the session creation request by the communication terminal 60 from an MME corresponding to the SGW 300, which has accepted an attach request from the communication terminal 60 to execute authentication processing on the communication terminal 60.

The selection unit 306 selects a route. For example, the selection unit 306 selects the route based on the route table stored in the storage unit 302. For example, the selection unit 306 selects the route according to the BGP best path selection algorithm. The selection unit 306 may select the route according to any other path selection algorithm.

For example, the selection unit 306 selects a route from the SGW 300 to a PGW of an HPLMN that is a transmission target of the session creation request by the communication terminal 60. For example, the selection unit 306 selects the route from the SGW 300 to the PGW of the HPLMN that is the transmission target of the session creation request by the communication terminal 60, among routes from the SGW 300 to each of PGWs of a plurality of HPLMNs to each of which an identical **IP** address is allocated. For example, the selection unit 306, in response to the reception unit 304 receiving the session creation request by the communication terminal 60, selects the route from the SGW 300 to the PGW of the HPLMN that is the transmission target of the session creation request by the communication terminal 60.

The transmission unit 308 transmits various types of information. For example, the transmission unit 308 transmits the various types of information to the router 26. For example, the transmission unit 308 transmits the session creation request by the communication terminal 60 to the router 26.

The transmission unit 308 transmits the various types of information to a PGW of an HPLMN. For example, the transmission unit 308 transmits the session creation request by the communication terminal 60 to the PGW of the HPLMN selected as the transmission target of the session creation request by the communication terminal 60 by following the route selected by the selection unit 306.

For example, the reception unit 304 receives a session creation response for the communication terminal 60 from the PGW of the HPLMN. For example, the reception unit 304 receives the session creation response for the communication terminal 60 from each of PGWs of a plurality of HPLMNs to each of which an identical IP address is allocated.

For example, the reception unit 304 receives uplink data from the communication terminal 60. For example, the transmission unit 308 transmits the uplink data from the communication terminal 60 to the router 26.

For example, the selection unit 306 selects a route from the SGW 300 to a PGW of an HPLMN that is a transmission target of the uplink data from the communication terminal 60. For example, the selection unit 306 selects the route from the SGW 300 to the PGW of the HPLMN that is the transmission target of the uplink data from the communication terminal 60, among routes from the SGW 300 to each of PGWs of a plurality of HPLMNs for which a session is created with the SGW 300. For example, the selection unit 306, in response to the reception unit 304 receiving, from the communication terminal 60 via an eNodeB, the uplink data from the communication terminal 60, selects the route from the SGW 300 to the PGW of the HPLMN that is the transmission target of the uplink data from the communication terminal 60. The transmission unit 308 may transmit the uplink data from the communication terminal 60 to the PGW of the HPLMN that is the transmission target of the uplink data from the communication terminal 60 by following the route selected by the selection unit 306.

Note that the SGW 300 may not store the route table in the storage unit 302, and may not include the creation unit 305 and the selection unit 306. In this case, the router 26 may store the route table, and may include the creation unit 305 and the selection unit 306.

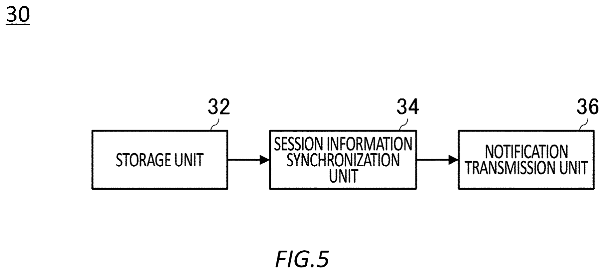

FIG. 5 schematically illustrates one example of a functional configuration of the database 30. The database 30 includes a storage unit 32, a session information synchronization unit 34, and a notification transmission unit 36. Note that the database 30 does not necessarily include all of these constituents.

The storage unit 32 stores session information on the communication terminal 60. For example, the storage unit 32 stores the session information on the communication terminal 60 registered by the PGW 100.

The session information synchronization unit 34 synchronizes the session information on the communication terminal 60 stored in the storage unit 32 between the database 30 corresponding to the PGW 100 and the database 50 corresponding to the PGW 200. For example, the session information synchronization unit 34 synchronizes the session information on the communication terminal 60 stored in the storage unit 32 between the database 30 and the database 50 by using a Pub/Sub scheme.

The notification transmission unit 36 transmits a notification. For example, the notification transmission unit 36 transmits the notification to the PGW 100. The notification transmission unit 36 may transmit the notification to the PGW 200.

For example, the notification transmission unit 36 transmits a session information notification. The notification transmission unit 36 may transmit a synchronization completion notification.

The storage unit 32 may store the session information on the communication terminal 60 synchronized between the database 30 and the database 50 by the PGW 100. The storage unit 32 may store the session information on the communication terminal 60 synchronized between the database 30 and the database 50 by the PGW 200. The storage unit 32 may store the session information on the communication terminal 60 synchronized between the database 30 and the database 50 by the database 50.

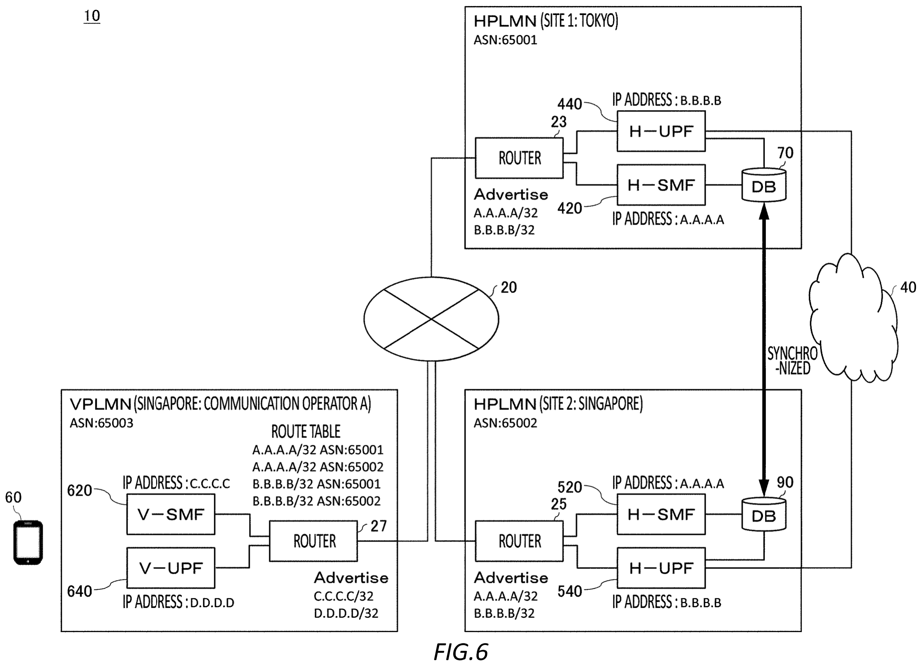

Fig. 6 schematically illustrates another example of the system 10. Here, parts different from those of the system 10 in FIG. 1 will be mainly described.

In FIG. 6, one example of a case is illustrated where the mobile communication service offered by the system 10 is the 5G communication service. The system 10 may include an H-SMF (Home-Session Management Function) 420. The system 10 may include an H-UPF (Home-User Plane Function) 440. The system 10 may include a router 23. The system 10 may include a database 70. The system 10 may include an H-SMF 520. The system 10 may include an H-UPF 540. The system 10 may include a router 25. The system 10 may include a database 90. The system 10 may include a V-SMF (Visited-Session Management Function) 620. The system 10 may include a V-UPF (Visited-User Plane Function) 640. The system 10 may include a router 27.

The H-SMF 420 has a function of managing a session. The H-UPF 440 has a function of transferring data of the communication terminal 60. For example, the data of the communication terminal 60 includes uplink data from the communication terminal 60. For example, the data of the communication terminal 60 includes downlink data to the communication terminal 60.

For example, the H-UPF 440 is located in a network in which the H-SMF 420 is located. For example, the H-SMF 420 and the H-UPF 440 are located in a network of a first country. In one example illustrated in FIG. 6, the H-SMF 420 and the H-UPF 440 are located in a network of Tokyo, Japan, having an ASN of 65001.

An IP address may be allocated to each of the H-SMF 420 and the H-UPF 440. For example, an IP address different from an IP address allocated to the H-SMF 420 is allocated to the H-UPF 440. In one example of the system 10 illustrated in FIG. 6, an IP address A.A.A.A with a subnet mask of 32 is allocated to the H-SMF 420, and B.B.B.B with the subnet mask of 32 is allocated to the H-UPF 440.

The H-SMF 520 has a function of managing a session. The H-SMF 520 may have a function similar to that of the H-SMF 420.

The H-UPF 540 has a function of transferring data of the communication terminal 60. The H-UPF 540 may have a function similar to that of the H-UPF 440.

For example, the H-SMF 520 is located in a network having an ASN different from the ASN of the network in which the H-SMF 420 is located. For example, the H-UPF 540 is located in the network in which the H-SMF 520 is located. Here, the description will be continued assuming that subscriber information on the user of the communication terminal 60 has been synchronized in advance between an HPLMN in which the H-SMF 420 and the H-UPF 440 are located and an HPLMN in which the H-SMF 520 and the H-UPF 540 are located.

For example, the H-SMF 520 and the H-UPF 540 are located in a network of a second country different from the first country. The H-SMF 520 and the H-UPF 540 may be located in the network of the first country. In one example illustrated in FIG. 6, the H-SMF 520 and the H-UPF 540 are located in a network of Singapore having an ASN of 65002.

An IP address may be allocated to each of the H-SMF 520 and the H-UPF 540. For example, an IP address identical to an IP address allocated to the H-SMF 420 is allocated to the H-SMF 520 by using IP Anycast. For example, an IP address identical to an IP address allocated to the H-UPF 540 is allocated to the H-UPF 540 by using IP Anycast. In one example of the system 10 illustrated in FIG. 6, an IP address A.A.A.A with a subnet mask of 32 is allocated to the H-SMF 520, and B.B.B.B with the subnet mask of 32 is allocated to the H-UPF 540.

The V-SMF 620 has a function of managing a session. The V-UPF 640 has a function of transferring data of the communication terminal 60. For example, the V-UPF 640 is located in a network in which the V-SMF 620 is located. In one example illustrated in FIG. 6, the V-SMF 620 and the V-UPF 640 are located in a network of a communication operator A in Singapore having an ASN of 65003.

An IP address may be allocated to each of the V-SMF 620 and the V-UPF 640. For example, an IP address different from an IP address allocated to the V-SMF 620 is allocated to the V-UPF 640. In one example of the system 10 illustrated in FIG. 6, an IP address C.C.C.C with the subnet mask of 32 is allocated to the V-SMF 620, and D.D.D.D with the subnet mask of 32 is allocated to the V-UPF 640.

The router 23 has a function of relaying data. For example, the router 23 relays uplink data. For example, the router 23 relays downlink data.

For example, the router 23 is located in the HPLMN in which the H-SMF 420 and the H-UPF 440 are located. The router 23 may be separated from the H-SMF 420 and the H-UPF 440. The router 23 may be integrated with the H-SMF 420. The router 23 may be integrated with the H-UPF 440.

The router 25 has a function of relaying data. The router 25 has a function similar to that of the router 23.

For example, the router 25 is located in the HPLMN in which the H-SMF 520 and the H-UPF 540 are located. The router 25 may be separated from the H-SMF 520 and the H-UPF 540. The router 25 may be integrated with the H-SMF 520. The router 25 may be integrated with the H-UPF 540.

The router 27 has a function of relaying data. For example, the router 27 relays uplink data. For example, the router 27 relays downlink data.

For example, the router 27 is located in a VPLMN in which the V-SMF 620 and the V-UPF 640 are located. The router 27 may be separated from the V-SMF 620 and the V-UPF 640. The router 27 may be integrated with the V-SMF 620. The router 27 may be integrated with the V-UPF 640.

For example, inter-organizational route information is exchanged among the router 23, the router 25, and the router 27 according to the BGP. For example, the route information is exchanged among the router 23, the router 25, and the router 27 in response to the route information being changed. The route information may be exchanged among the router 23, the router 25, and the router 27 periodically.

For example, the router 23 advertises the route information to the router 27. The router 23 may advertise the route information to the IPX. The router 25 may advertise the route information in a manner similar to the router 23.

In one example of the system 10 illustrated in FIG. 6, the router 23 advertises the ASN = 65001, the IP address of the H-SMF 420 = A.A.A.A/32, and the IP address of the H-UPF 440 = B.B.B.B/32. Further, in one example of the system 10 illustrated in FIG. 6, the router 25 advertises the ASN = 65002, the IP address of the H-SMF 520 = A.A.A.A/32, and the IP address of the H-UPF 540 = B.B.B.B/32.

For example, the router 27 advertises the route information to the router 23 and the router 25. The router 27 may advertise the route information to the IPX. In one example of the system 10 illustrated in FIG. 6, the router 27 advertises the ASN = 65003, the IP address of the V-SMF 620 = C.C.C.C/32, and the IP address of the V-UPF 640 = D.D.D.D/32.

For example, the router 27 creates a route table. For example, the router 27 creates the route table based on the route information advertised by each of the router 23 and the router 25. For example, the router 27 creates the route table by associating an ASN of a network in which a router is located with an IP address allocated to a device located in the network in question. In one example of the system 10 illustrated in FIG. 6, the router 27 creates a route table containing the ASN = 65001 and the IP address of the H-SMF 420 = A.A.A.A/32; the ASN = 65001 and the IP address of the H-UPF 440 = B.B.B.B/32; the ASN = 65002 and the IP address of the H-SMF 520 = A.A.A.A/32; and the ASN = 65002 and the IP address of the H-UPF 540 = B.B.B.B/32.

For example, the V-SMF 620 receives a session creation request by the communication terminal 60 of the user who has visited the VPLMN in which the V-SMF 620 and the V-UPF 640 are located, for requesting to create a session with the PDN 40. The V-SMF 620 may be one example of a third SMF. The V-UPF 640 may be one example of a third UPF.

For example, the session creation request contains the IP address of the V-SMF 620. For example, the session creation request contains the IP address of the V-UPF 640. For example, the session creation request contains a TEID allocated to a communication tunnel for the V-SMF 620. For example, the session creation request contains a TEID which is allocated to a communication tunnel for the V-UPF 640 and which is different from the TEID allocated to the communication tunnel for the V-SMF 620. For example, the session creation request contains the IP address of the H-SMF 420. For example, the session creation request contains the IP address of the H-UPF 440.

The V-SMF 620 may transmit, to the router 27, the session creation request by the communication terminal 60 thus received. The router 27 may select a route from the V-SMF 620 to an H-SMF that is a transmission target of the session creation request by the communication terminal 60. For example, the router 27 selects the route from the V-SMF 620 to the H-SMF that is the transmission target of the session creation request by the communication terminal 60, by selecting a route from the router 27 to reach a router corresponding to the H-SMF that is the transmission target of the session creation request by the communication terminal 60.

For example, the router 27, based on the IP address of the H-SMF 420 contained in the session creation request by the communication terminal 60, selects the route from the V-SMF 620 to the H-SMF that is the transmission target of the session creation request by the communication terminal 60. For example, when there are a plurality of H-SMFs to each of which an IP address identical to the IP address of the H-SMF 420 is allocated, then the router 27, based on the route table thus created, selects one route among routes from the V-SMF 620 to each of the plurality of H-SMFs to each of which the IP address identical to the IP address of the H-SMF 420 is allocated, as the route from the V-SMF 620 to the H-SMF that is the transmission target of the session creation request by the communication terminal 60, according to the BGP best path selection algorithm. For example, the router 27 selects a route having a shortest distance from the V-SMF 620, as the route from the V-SMF 620 to the H-SMF that is the transmission target of the session creation request by the communication terminal 60.

In one example of the system 10 illustrated in FIG. 6, when the V-SMF 620 is able to transmit the session creation request by the communication terminal 60 to both of the H-SMF 420 and the H-SMF 520, the router 27 selects a route from the router 27 via a network 20 to reach the router 25 as the route from the V-SMF 620 to the H-SMF that is the transmission target of the session creation request by the communication terminal 60, because a distance of the route from the router 27 via the network 20 to reach the router 25 is shorter than a distance of a route from the router 27 via the network 20 to reach the router 23. In contrast, in one example of the system 10 illustrated in FIG. 6, when the V-SMF 620 is able to transmit the session creation request by the communication terminal 60 only to the H-SMF 420, such as when a failure occurs in the H-SMF 520, when the H-SMF 520 is under maintenance, or the like, then the router 27 selects the route from the router 27 via the network 20 to reach the router 23, as the route from the V-SMF 620 to the H-SMF that is the transmission target of the session creation request by the communication terminal 60. Here, the description will be continued assuming that the router 27 has selected the route from the router 27 via the network 20 to reach the router 25.

The router 27 may transmit the session creation request via the network 20 to the router 25. The router 25 may transmit, to the H-SMF 520, the session creation request thus received. The H-SMF 520 may be one example of a first SMF. The H-UPF 540 may be one example of a first UPF.

The H-SMF 520 may, in response to receiving the session creation request from the V-SMF 620, create session information on the communication terminal 60. For example, the session information contains the IP address of the H-SMF 520. For example, the session information contains the IP address of the H-UPF 540. For example, the session information contains TEIDs allocated to a communication tunnel for the H-SMF 520 and to a communication tunnel for the H-SMF 420. For example, the session information contains TEIDs which are allocated to a communication tunnel for the H-UPF 540 and to a communication tunnel for the H-UPF 440 and which are different from the TEIDs allocated to the communication tunnel for the H-SMF 520 and to the communication tunnel for the H-SMF 420. For example, the session information contains the IP address of the V-SMF 620. For example, the session information contains the IP address of the V-UPF 640. For example, the session information contains the TEID allocated to the communication tunnel for the V-SMF 620. For example, the session information contains the TEID allocated to the communication tunnel for the V-UPF 640.

The H-SMF 520 may register, in the database 90 corresponding to the H-SMF 520, the session information on the communication terminal 60 thus created. For example, the H-SMF 520 may have stored an IP address of the database 90 in advance.

For example, the database 90 contains a message queue for temporarily storing the session information on the communication terminal 60. The database 90 may be one example of a first storage unit.

The database 90 may be separated from the H-SMF 520. The database 90 may be integrated with the H-SMF 520.

The database 90 may synchronize the session information on the communication terminal 60 between the database 90 and the database 70 corresponding to the H-SMF 420. The H-SMF 420 may be one example of a second SMF. The H-UPF 440 may be one example of a second UPF. The database 90 may be one example of a session information synchronization unit. The database 70 may be one example of a second storage unit.

For example, the database 90 synchronizes the session information on the communication terminal 60 between the database 90 and the database 70 by using a Pub/Sub scheme. In this case, the database 90 may be a publisher, and the database 70 may be a subscriber.

The database 90 may, in response to synchronizing the session information on the communication terminal 60 between the database 90 and the database 70, notify the H-SMF 520 of a synchronization completion notification for notifying it that synchronization of the session information on the communication terminal 60 has completed. For example, the synchronization completion notification contains the session information on the communication terminal 60 synchronized between the database 90 and the database 70. The database 90 may have stored the IP address of the H-SMF 520 in advance.

The database 90 may, in response to synchronizing the session information on the communication terminal 60 between the database 90 and the database 70, notify the H-UPF 540 of a session information notification containing the session information on the communication terminal 60 synchronized between the database 90 and the database 70. The database 90 may have stored the IP address of the H-UPF 540 in advance.

The database 70 may, in response to the session information on the communication terminal 60 being synchronized between the database 70 and the database 90 by the database 90, notify the H-SMF 420 of the synchronization completion notification. The database 70 may have stored the IP address of the H-SMF 420 in advance.

The database 70 may, in response to the session information on the communication terminal 60 being synchronized between the database 70 and the database 90 by the database 90, notify the H-UPF 440 of the session information notification. Accordingly, the H-SMF 520 may be the publisher, and the H-UPF 440 may be the subscriber. The database 70 may have stored the IP address of the H-UPF 440 in advance.

The H-SMF 520 may, in response to being notified of the synchronization completion notification from the database 90, cause the H-UPF 540 to establish a communication tunnel between the H-UPF 540 and the V-UPF 640 in order to create the session for the communication terminal 60 with the PDN 40. For example, the H-SMF 520 causes the H-UPF 540 to establish the communication tunnel between the H-UPF 540 and the V-UPF 640 by transmitting, to H-UPF 540, a communication tunnel establishment request for requesting to establish the communication tunnel to the V-UPF 640.

The H-UPF 540 may, in response to receiving the communication tunnel establishment request from the H-SMF 520, establish the communication tunnel between the H-UPF 540 and the V-UPF 640 based on the session information on the communication terminal 60, which is contained in the session information notification notified from the database 90 and which is synchronized between the database 90 and the database 70. For example, the H-UPF 540 executes setting processing for processing uplink data from the communication terminal 60 in order to establish the communication tunnel between the H-UPF 540 and the V-UPF 640. For example, the H-UPF 540 executes setting processing for processing downlink data from the communication terminal 60 in order to establish the communication tunnel between the H-UPF 540 and the V-UPF 640. The H-UPF 540 may, in response to establishing the communication tunnel between the H-UPF 540 and the V-UPF 640, transmit a communication tunnel establishment response to the H-SMF 520.

The H-SMF 520 may, in response to being notified of the synchronization completion notification from the database 90, establish a communication tunnel between the H-SMF 520 and the V-SMF 620 in order to create the session for the communication terminal 60 with the PDN 40. For example, the H-SMF 520, based on the session information on the communication terminal 60, which is contained in the synchronization completion notification notified from the database 90 and which is synchronized between the database 90 and the database 70, establishes the communication tunnel between the H-SMF 520 and the V-SMF 620.

The H-SMF 420 may, in response to being notified of the synchronization completion notification from the database 70, cause the H-UPF 440 to establish a communication tunnel between the H-UPF 440 and the V-UPF 640 in order to create the session for the communication terminal 60 with the PDN 40. For example, the H-SMF 420 may cause the H-UPF 440 to establish the communication tunnel between the H-UPF 440 and the V-UPF 640 by transmitting, to H-UPF 440, a communication tunnel establishment request.

The H-UPF 440 may, in response to receiving the communication tunnel establishment request from the H-SMF 420, establish the communication tunnel between the H-UPF 440 and the V-UPF 640 based on the session information on the communication terminal 60, which is contained in the session information notification notified from the database 70 and which is synchronized between the database 70 and the database 90. The H-UPF 440 may establish the communication tunnel between the H-UPF 440 and the V-UPF 640 in a manner similar to when the H-UPF 540 establishes the communication tunnel between the H-UPF 540 and the V-UPF 640. The H-UPF 440 may, in response to establishing the communication tunnel between the H-UPF 440 and the V-UPF 640, transmit a communication tunnel establishment response to the H-SMF 420.

The H-SMF 420 may, in response to being notified of the synchronization completion notification from the database 70, establish a communication tunnel between the H-SMF 420 and the V-SMF 620 in order to create the session for the communication terminal 60 with the PDN 40. For example, the H-SMF 420, based on the session information on the communication terminal 60, which is contained in the synchronization completion notification notified from the database 70 and which is synchronized between the database 70 and the database 90, establishes the communication tunnel between the H-SMF 420 and the V-SMF 620.

The H-SMF 520 may transmit a session creation response for the communication terminal 60 to the V-SMF 620. For example, the H-SMF 520, in response to receiving the communication tunnel establishment response from the H-UPF 540, transmits the session creation response for the communication terminal 60 to the V-SMF 620. For example, the H-SMF 520, in response to receiving the communication tunnel establishment response from the H-UPF 540 and establishing the communication tunnel between the H-SMF 520 and the V-SMF 620, transmits the session creation response for the communication terminal 60 to the V-SMF 620. Once the H-SMF 520 transmits the session creation response for the communication terminal 60 to the V-SMF 620, the session for the communication terminal 60 with the PDN 40 via the V-SMF 620 and the H-SMF 520 is created.

For example, the session creation response contains the IP address of the H-SMF 520. For example, the session creation response contains the IP address of the H-UPF 540. For example, the session creation response contains the TEIDs allocated to the communication tunnel for the H-SMF 520 and to the communication tunnel for the H-SMF 420. For example, the session creation response contains the TEIDs allocated to the communication tunnel for the H-UPF 540 and to the communication tunnel for the H-UPF 440.

The H-SMF 420 may transmit the session creation response for the communication terminal 60 to the V-SMF 620. The H-SMF 420 may transmit the session creation response for the communication terminal 60 to the V-SMF 620 in a manner similar to the H-SMF 520. Once the H-SMF 420 transmits the session creation response for the communication terminal 60 to the V-SMF 620, the session for the communication terminal 60 with the PDN 40 via the V-SMF 620 and the H-SMF 420 is created.

For example, the V-UPF 640 receives uplink data from the communication terminal 60. The V-UPF 640 may transmit, to the router 27, the uplink data from the communication terminal 60 thus received.

The router 27 selects a route from the V-UPF 640 to the H-UPF that is a transmission target of the uplink data by the communication terminal 60. For example, the router 27 selects the route from the V-UPF 640 to the H-UPF that is the transmission target of the uplink data from the communication terminal 60, among H-UPFs for each of which a session is created with the V-UPF 640. For example, when there are a plurality of H-UPFs for each of which a session is created with the V-UPF 640, then the router 27, based on the route table thus created, selects one route among routes to each of the plurality of H-UPFs for each of which the session is created with the V-UPF 640, as the route from the V-UPF 640 to the H-UPF that is the transmission target of the uplink data from the communication terminal 60, according to the BGP best path selection algorithm. For example, the router 27 selects a route having a shortest distance from the V-UPF 640, as the route from the V-UPF 640 to the H-UPF that is the transmission target of the uplink data from the communication terminal 60.

In one example of the system 10 illustrated in FIG. 6, when the V-UPF 640 is able to transmit the uplink data from the communication terminal 60 to both of the H-UPF 440 and the H-UPF 540, the router 27 selects a route from the router 27 via the network 20 to reach the router 25 as the route from the V-UPF 640 to the H-UPF that is the transmission target of the uplink data from the communication terminal 60. In this case, the router 27 transmits the uplink data from the communication terminal 60 via the network 20 to the router 25. The router 25 transmits, to the H-UPF 540, the uplink data from the communication terminal 60 thus received. The H-UPF 540 transmits, to the PDN 40, the uplink data from the communication terminal 60 thus received.

In contrast, in one example of the system 10 illustrated in FIG. 6, when the V-UPF 640 is able to transmit the uplink data from the communication terminal 60 only to the H-UPF 440, such as when a failure occurs in the V-UPF 640, when the V-UPF 640 is under maintenance, or the like, then the router 27 selects the route from the router 27 via the network 20 to reach the router 23, as the route from the V-UPF 640 to the H-UPF that is the transmission target of the uplink data from the communication terminal 60. In this case, the router 27 transmits the uplink data from the communication terminal 60 via the network 20 to the router 23. The router 23 transmits, to the H-UPF 440, the uplink data from the communication terminal 60 thus received. The H-UPF 440 transmits, to the PDN 40, the uplink data from the communication terminal 60 thus received.

In one example of the system 10 illustrated in FIG. 6, when the uplink data from the communication terminal 60 is transmitted via the V-UPF 640 and the H-UPF 540 to the PDN 40, the uplink data from the communication terminal 60 is transmitted to the PDN 40 through domestic roaming. In contrast, in one example of the system 10 illustrated in FIG. 6, when the uplink data from the communication terminal 60 is transmitted via the V-UPF 640 and the H-UPF 440 to the PDN 40, the uplink data from the communication terminal 60 is transmitted to the PDN 40 through international roaming.

The database 90 may have a function similar to that of the database 70. For example, when the H-SMF 420 has registered the session information on the communication terminal 60 in the database 70, the database 70 synchronizes the session information on the communication terminal 60 between the database 70 and the database 90 in a manner similar to the database 90.

In one example of the system 10 illustrated in FIG. 6, the communication operator who issued the SIM card to the user of the communication terminal 60 may build an HPLMN for each of three or more sites. In this case, an identical IP address may be allocated to each of an H-SMF and an H-UPF in each site of the three or more sites.

According to the system 10 illustrated in FIG. 6, an H-SMF which has received a session creation request by the communication terminal 60 from the V-SMF 620 to create session information on the communication terminal 60 registers, in a database corresponding to an H-UPF located in a network in which the H-SMF is located, the session information on the communication terminal 60 thus created. Thereafter, the session information on the communication terminal 60 registered in the database in question is synchronized between the database in question and a database corresponding to an H-UPF to which an IP address identical to that of the H-UPF in question is allocated. In this way, the H-UPF to which the IP address identical to that of the H-UPF located in the network having located therein the H-SMF which has received the session creation request by the communication terminal 60 from the V-SMF 620 is allocated can acquire the session information on the communication terminal 60 without the H-SMF located in the network in which the H-UPF in question is located receiving any session creation request by the communication terminal 60 from the V-SMF 620, so in 5G communication, the system 10 illustrated in FIG. 6 can create a session between the V-UPF 640 and each of a plurality of H-UPFs to each of which an identical IP address is allocated. Then, the router 27 selects one route among routes to each of the plurality of H-UPFs for each of which a session with the V-UPF 640 is created, as a route from the V-UPF 640 to an H-UPF that is a transmission target of uplink data from the communication terminal 60, according to the BGP best path selection algorithm. In this way, the router 27 can preferentially select a route having a short distance from the V-UPF 640, so in the 5G communication, the system 10 illustrated in FIG. 6 can suppress the occurrence of the communication delay with the communication terminal 60. In addition, by creating a session between the V-UPF 640 and each of the plurality of H-UPFs to each of which an identical IP address is allocated, even when a failure occurs in one H-UPF among the plurality of H-UPFs in question, when the one H-UPF in question is under maintenance, or the like, the router 27 can select a route different from a route from the V-UPF 640 to the one H-UPF in question as the route from the V-UPF 640 to the H-UPF that is the transmission target of the uplink data from the communication terminal 60. In this way, in the 5G communication, the system 10 illustrated in FIG. 6 can offer a mobile communication service having higher communication redundancy than that in a system where a different IP address is allocated to each of a plurality of H-UPFs.

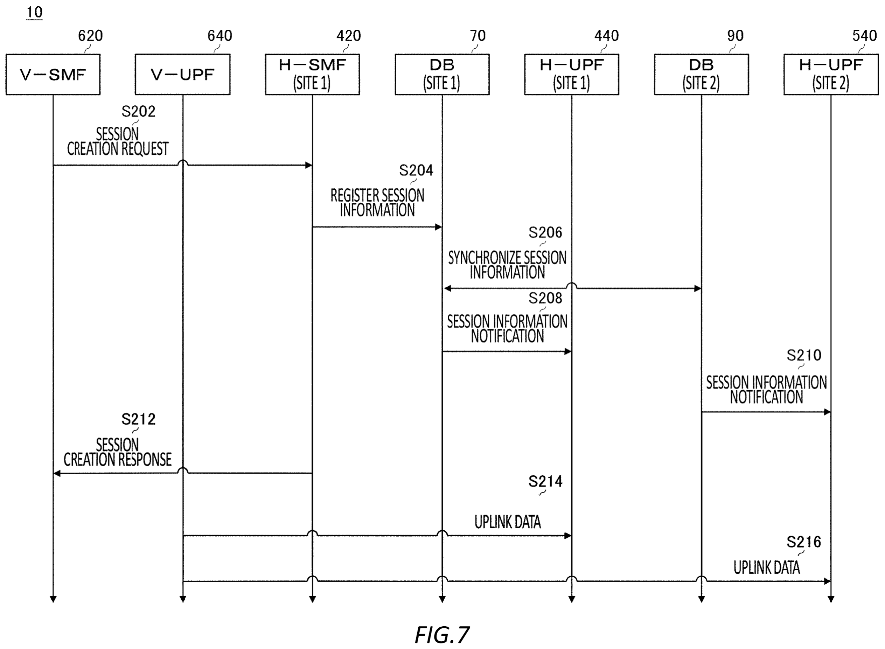

FIG. 7 is a descriptive diagram for describing another example of the processing flow of the system 10. Here, the description will follow assuming that a state where the user of the communication terminal 60 has visited the VPLMN in which the V-SMF 620 and the V-UPF 640 are located is an initial state.

In S202, the V-SMF 620 transmits a session creation request by the communication terminal 60 which requests to create a session with the PDN 40. For example, the V-SMF 620 transmits the session creation request by the communication terminal 60 received from an AMF (Access and Mobility Management Function) corresponding to the V-SMF 620, which has accepted an attach request from the communication terminal 60 to execute authentication processing on the communication terminal 60. Here, the description will be continued assuming that the router 27 selects a route from the V-UPF 640 illustrated in FIG. 6 to the H-SMF 420 in a site 1 and that the V-UPF 640 transmits the session creation request by the communication terminal 60 to the H-SMF 420.

The H-SMF 420 receives, from the V-SMF 620, the session creation request by the communication terminal 60. The H-SMF 420 may, based on the session creation request by the communication terminal 60 thus received, create session information on the communication terminal 60.

In S204, the H-SMF 420 registers, in the database 70 corresponding to the H-UPF 440, the session information on the communication terminal 60 thus created. In S206, the database 70 synchronizes the session information on the communication terminal 60 registered by the H-SMF 420 in S204 between the database 70 and the database 90 corresponding to the H-UPF 540 in a site 2 illustrated in FIG. 6.

The database 70 may, in response to synchronizing the session information on the communication terminal 60 between the database 70 and the database 90, notify the H-SMF 420 of a synchronization completion notification. The database 90 may, in response to the session information on the communication terminal 60 being synchronized between the database 90 and the database 70 by the database 70, notify the H-SMF 520 of the synchronization completion notification.

In S208, the database 70, in response to synchronizing the session information on the communication terminal 60 between the database 70 and the database 90 in S206, notifies the H-UPF 440 of a session information notification. The H-SMF 420 may, in response to being notified of the synchronization completion notification from the database 70, cause the H-UPF 440 to establish a communication tunnel between the H-UPF 440 and the V-UPF 640 in order to create the session for the communication terminal 60 with the PDN 40. The H-UPF 440 may, in response to establishing the communication tunnel between the H-UPF 440 and the V-UPF 640, transmit a communication tunnel establishment response to the H-SMF 420. The H-SMF 420 may, in response to being notified of the synchronization completion notification from the database 70, establish a communication tunnel between the H-SMF 420 and the V-SMF 620 in order to create the session for the communication terminal 60 with the PDN 40.

In S210, the database 90, in response to the session information on the communication terminal 60 being synchronized between the database 90 and the database 70 by the database 70 in S206, notifies the H-UPF 540 of the session information notification. The H-SMF 520 may, in response to being notified of the synchronization completion notification from the database 90, cause the H-UPF 540 to establish a communication tunnel between the H-UPF 540 and the V-UPF 640 in order to create the session for the communication terminal 60 with the PDN 40. The H-UPF 540 may, in response to establishing the communication tunnel between the H-UPF 540 and the V-UPF 640, transmit a communication tunnel establishment response to the H-SMF 520. The H-SMF 520 may, in response to being notified of the synchronization completion notification from the database 90, establish a communication tunnel between the H-SMF 520 and the V-SMF 620 in order to create the session for the communication terminal 60 with the PDN 40.

In S212, the H-SMF 420 transmits the session creation response for the communication terminal 60 to the V-SMF 620. The H-SMF 520 may transmit the session creation response for the communication terminal 60 to the V-SMF 620 in a manner similar to the H-SMF 420.

In S214, when the router 27 selects a route from the V-UPF 640 illustrated in FIG. 6 to the H-UPF 440 in the site 1 as a route from the V-UPF 640 to an H-SMF that is a transmission target of the uplink data from the communication terminal 60, then the V-UPF 640 transmits the uplink data from the communication terminal 60 to the H-UPF 440. In S216, when the router 27 selects a route from the V-UPF 640 illustrated in FIG. 6 to the H-UPF 540 in the site 2 as the route from the V-UPF 640 to the H-SMF that is the transmission target of the uplink data from the communication terminal 60, then the V-UPF 640 transmits the uplink data from the communication terminal 60 to the H-UPF 540.

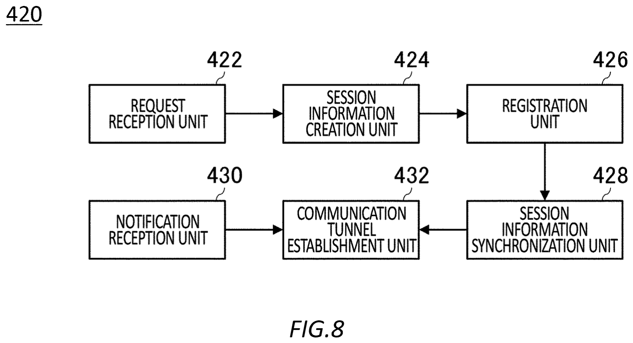

FIG. 8 schematically illustrates one example of a functional configuration of the H-SMF 420. The H-SMF 420 includes a request reception unit 422, a session information creation unit 424, a registration unit 426, a session information synchronization unit 428, a notification reception unit 430, and a communication tunnel establishment unit 432. Note that the H-SMF 420 does not necessarily include all of these constituents.

The request reception unit 422 receives, from the V-SMF 620, a session creation request by the communication terminal 60 which requests to create a session with the PDN 40. For example, the request reception unit 422 receives the session creation request by the communication terminal 60 from the V-SMF 620 via the network 20 and the router 23.

For example, the request reception unit 422 receives, from the V-SMF 620 located in a country in which the H-SMF 420 and the H-UPF 440 are located, the session creation request by the communication terminal 60. For example, the request reception unit 422 receives, from the V-SMF 620 located in a country different from the country in which the H-SMF 420 and the H-UPF 440 are located, the session creation request by the communication terminal 60.

The session information creation unit 424 creates session information on the communication terminal 60. For example, the session information creation unit 424, in response to the request reception unit 422 receiving the session creation request by the communication terminal 60, creates the session information on the communication terminal 60. For example, the session information creation unit 424, based on the session creation request by the communication terminal 60, creates the session information on the communication terminal 60.

The registration unit 426 registers, in the database 70 corresponding to the H-UPF 440, the session information on the communication terminal 60 created by the session information creation unit 424. For example, the registration unit 426 registers, in the database 70 located in a network in which the H-SMF 420 and the H-UPF 440 are located, the session information on the communication terminal 60. The registration unit 426 may register, in the database 70 located in a network having an ASN different from an ASN of the network in which the H-SMF 420 and the H-UPF 440 are located, the session information on the communication terminal 60.

The session information synchronization unit 428 synchronizes the session information on the communication terminal 60 registered in the database 70 by the registration unit 426 between the database 70 and the database 90 corresponding to the H-UPF 540. For example, the session information synchronization unit 428 synchronizes the session information on the communication terminal 60 between the database 70 and the database 90 by using a Pub/Sub scheme. The session information synchronization unit 428 may synchronize the session information on the communication terminal 60 between the database 70 and the database 90 through any other scheme. The session information synchronization unit 428 may, in response to synchronizing the session information on the communication terminal 60 between the database 70 and the database 90, notify the H-SMF 520 of a synchronization completion notification.

The notification reception unit 430 receives a synchronization completion notification. For example, the notification reception unit 430 receives the synchronization completion notification via the network 20 and the router 23. The notification reception unit 430 may receive the synchronization completion notification via the PDN 40.

For example, the notification reception unit 430 receives the synchronization completion notification from the database 70. For example, the notification reception unit 430 receives the synchronization completion notification from the database 90. The notification reception unit 430 may receive the synchronization completion notification from the H-SMF 520.

The communication tunnel establishment unit 432 may cause the H-UPF 440 to establish a communication tunnel between the H-UPF 440 and the V-UPF 640 in order to create a session for the communication terminal 60 with the PDN 40. For example, the communication tunnel establishment unit 432, in response to the session information synchronization unit 428 synchronizing the session information on the communication terminal 60 between the database 70 and the database 90, causes the H-UPF 440 to establish the communication tunnel between the H-UPF 440 and the V-UPF 640. The communication tunnel establishment unit 432 may, in response to the notification reception unit 430 receiving the synchronization completion notification, cause the H-UPF 440 to establish the communication tunnel between the H-UPF 440 and the V-UPF 640. For example, the communication tunnel establishment unit 432 causes the H-UPF 440 to establish the communication tunnel between the H-UPF 440 and the V-UPF 640 by transmitting, to H-UPF 440, a communication tunnel establishment request.

For example, the communication tunnel establishment unit 432, based on the session information on the communication terminal 60, which is synchronized between the database 70 and the database 90 and which is stored in the database 70, causes the H-UPF 440 to establish the communication tunnel between the H-UPF 440 and the V-UPF 640. For example, the communication tunnel establishment unit 432, based on the session information on the communication terminal 60 synchronized between the database 70 and the database 90 by the session information synchronization unit 428, causes the H-UPF 440 to establish the communication tunnel between the H-UPF 440 and the V-UPF 640. For example, the communication tunnel establishment unit 432, based on the session information on the communication terminal 60 synchronized between the database 70 and the database 90 by the H-SMF 520, causes the H-UPF 440 to establish the communication tunnel between the H-UPF 440 and the V-UPF 640. For example, the communication tunnel establishment unit 432, based on the session information on the communication terminal 60 synchronized between the database 70 and the database 90 by the database 70, causes the H-UPF 440 to establish the communication tunnel between the H-UPF 440 and the V-UPF 640. The communication tunnel establishment unit 432 may, based on the session information on the communication terminal 60 synchronized between the database 70 and the database 90 by the database 90, cause the H-UPF 440 to establish the communication tunnel between the H-UPF 440 and the V-UPF 640.

The communication tunnel establishment unit 432 establishes a communication tunnel between the H-SMF 420 and the V-SMF 620 in order to create a session for the communication terminal 60 with the PDN 40. For example, the communication tunnel establishment unit 432, in response to the session information synchronization unit 428 synchronizing the session information on the communication terminal 60 between the database 70 and the database 90, establishes the communication tunnel between the H-SMF 420 and the V-SMF 620. The communication tunnel establishment unit 432 may, in response to the notification reception unit 430 receiving the synchronization completion notification, establish the communication tunnel between the H-SMF 420 and the V-SMF 620.

For example, the communication tunnel establishment unit 432, based on the session information on the communication terminal 60, which is synchronized between the database 70 and the database 90 and which is stored in the database 70, establishes the communication tunnel between the **H-**SMF 420 and the V-SMF 620. For example, the communication tunnel establishment unit 432, based on the session information on the communication terminal 60 synchronized between the database 70 and the database 90 by the session information synchronization unit 428, establishes the communication tunnel between the H-SMF 420 and the V-SMF 620. For example, the communication tunnel establishment unit 432, based on the session information on the communication terminal 60 synchronized between the database 70 and the database 90 by the H-SMF 520, establishes the communication tunnel between the H-SMF 420 and the V-SMF 620. For example, the communication tunnel establishment unit 432, based on the session information on the communication terminal 60 synchronized between the database 70 and the database 90 by the database 70, establishes the communication tunnel between the H-SMF 420 and the V-SMF 620. The communication tunnel establishment unit 432 may, based on the session information on the communication terminal 60 synchronized between the database 70 and the database 90 by the database 90, establish the communication tunnel between the H-SMF 420 and the V-SMF 620.

For example, the communication tunnel establishment unit 432, based on the session information on the communication terminal 60, which has been acquired by accessing the database 70 and which is synchronized between the database 70 and the database 90, establishes the communication tunnel between the H-SMF 420 and the V-SMF 620. The communication tunnel establishment unit 432 may, based on the session information on the communication terminal 60 synchronized between the database 70 and the database 90 contained in the synchronization completion notification received by the notification reception unit 430, establish the communication tunnel between the H-SMF 420 and the V-SMF 620.

The communication tunnel establishment unit 432 may transmit a session creation response for the communication terminal 60 to the V-SMF 620. For example, the communication tunnel establishment unit 432, in response to the communication tunnel establishment unit 432 receiving a communication tunnel establishment response from the H-UPF 540, transmits the session creation response for the communication terminal 60 to the V-SMF 620. For example, the communication tunnel establishment unit 432, in response to the communication tunnel establishment unit 432 receiving the communication tunnel establishment response and the communication tunnel establishment unit 432 establishing a communication tunnel between the H-SMF 520 and the V-SMF 620, transmits the session creation response for the communication terminal 60 to the V-SMF 620.

The communication tunnel establishment unit 432 may set a QoS of the communication tunnel between the H-UPF 440 and the V-UPF 640. For example, the communication tunnel establishment unit 432 sets the QoS of the communication tunnel between the H-UPF 440 and the V-UPF 640 by receiving QoS setting information for setting the QoS of the communication tunnel between the H-UPF 440 and the V-UPF 640 from a PCF (Policy Control Function) corresponding to the H-SMF 420.

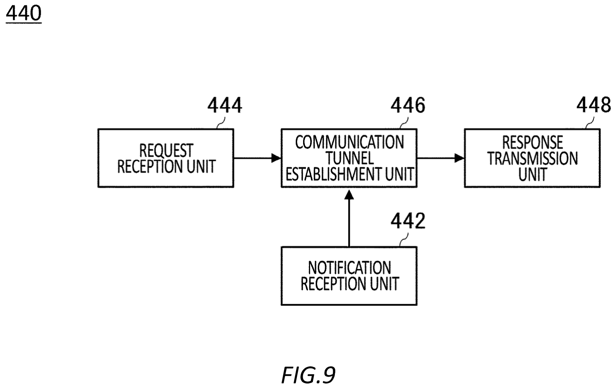

FIG. 9 schematically illustrates one example of a functional configuration of the H-UPF 440. The H-UPF 440 includes a notification reception unit 442, a request reception unit 444, a communication tunnel establishment unit 446, and a response transmission unit 448. Note that the H-UPF 440 does not necessarily include all of these constituents.

The notification reception unit 442 receives a session information notification. For example, the notification reception unit 442 receives the session information notification via the network 20 and the router 23. The notification reception unit 442 may receive the session information notification via the PDN 40.

For example, the notification reception unit 442 receives the session information notification from the database 70. For example, the notification reception unit 442 receives the session information notification from the database 90. The notification reception unit 442 may receive the session information notification from the H-SMF 520.

The request reception unit 444 receives a communication tunnel establishment request. For example, the request reception unit 444 receives the communication tunnel establishment request from the H-SMF 420.

The communication tunnel establishment unit 446 establishes a communication tunnel between the H-UPF 440 and the V-UPF 640 in order to create a session for the communication terminal 60 with the PDN 40. For example, the communication tunnel establishment unit 446, in response to the request reception unit 444 receiving the communication tunnel establishment request, establishes the communication tunnel between the H-UPF 440 and the V-UPF 640.

For example, the communication tunnel establishment unit 446, based on the session information on the communication terminal 60, which is synchronized between the database 70 and the database 90 and which is stored in the database 70, establishes the communication tunnel between the H-UPF 440 and the V-UPF 640. For example, the communication tunnel establishment unit 446, based on the session information on the communication terminal 60 synchronized between the database 70 and the database 90 by the H-SMF 420, establishes the communication tunnel between the H-UPF 440 and the V-UPF 640. For example, the communication tunnel establishment unit 446, based on the session information on the communication terminal 60 synchronized between the database 70 and the database 90 by the H-SMF 520, establishes the communication tunnel between the H-UPF 440 and the V-UPF 640. For example, the communication tunnel establishment unit 446, based on the session information on the communication terminal 60 synchronized between the database 70 and the database 90 by the database 70, establishes the communication tunnel between the H-UPF 440 and the V-UPF 640. The communication tunnel establishment unit 446 may, based on the session information on the communication terminal 60 synchronized between the database 70 and the database 90 by the database 90, establish the communication tunnel between the H-UPF 440 and the V-UPF 640.

For example, the communication tunnel establishment unit 446, based on the session information on the communication terminal 60, which is contained in the session information notification received by the notification reception unit 430 and which is synchronized between the database 70 and the database 90, establishes the communication tunnel between the H-UPF 440 and the V-UPF 640. The communication tunnel establishment unit 446 may, based on the session information on the communication terminal 60, which has been acquired by accessing the database 70 and which is synchronized between the database 70 and the database 90, establish the communication tunnel between the H-UPF 440 and the V-UPF 640.

The response transmission unit 448 transmits a communication tunnel establishment response. For example, the response transmission unit 448, in response to the communication tunnel establishment unit 446 establishing the communication tunnel between the H-UPF 440 and the V-UPF 640, transmits the communication tunnel establishment response.

For example, the response transmission unit 448 transmits the communication tunnel establishment response to the H-SMF 420. The response transmission unit 448 may transmit the communication tunnel establishment response to the H-SMF 520.

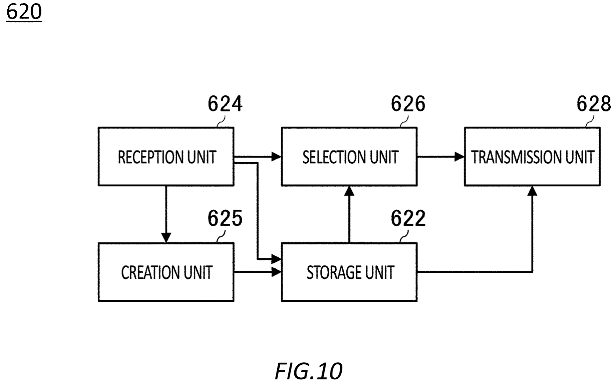

FIG. 10 schematically illustrates one example of a functional configuration of the V-SMF 620. The V-SMF 620 includes a storage unit 622, a reception unit 624, a creation unit 625, a selection unit 626, and a transmission unit 628. Note that the V-SMF 620 does not necessarily include all of these constituents.

The storage unit 622 stores various types of information. For example, the storage unit 622 stores a route table.

For example, the route table contains route information between the V-SMF 620 and the H-SMF 420. For example, the route table contains route information between the V-SMF 620 and the H-SMF 520.

The reception unit 624 receives various types of information. For example, the reception unit 624 receives the various types of information via the network 20 and the router 27. The reception unit 624 may receive the various types of information via a radio access network. The reception unit 624 may store, in the storage unit 622, the various types of information thus received.

For example, the reception unit 624 receives route information advertised by the router 23. For example, the reception unit 624 receives route information advertised by the router 25. The reception unit 624 may receive route information advertised by the IPX.

For example, the reception unit 624 receives the route information between the V-SMF 620 and the H-SMF 420. For example, the reception unit 624 receives the route information between the V-SMF 620 and the H-SMF 520.

The creation unit 625 creates a route table. For example, the creation unit 625 creates the route table based on the route information received by the reception unit 624. The creation unit 625 may store, in the storage unit 622, the route table thus created.

For example, the reception unit 624 receives a session creation request by the communication terminal 60. For example, the reception unit 624 receives the session creation request by the communication terminal 60 from an AMF corresponding to the V-SMF 620, which has accepted an attach request from the communication terminal 60 to execute authentication processing on the communication terminal 60.

The selection unit 626 selects a route. For example, the selection unit 626 selects the route based on the route table stored in the storage unit 622. For example, the selection unit 626 selects the route according to the BGP best path selection algorithm. The selection unit 626 may select the route according to any other path selection algorithm.

For example, the selection unit 626 selects a route from the V-SMF 620 to an H-SMF that is a transmission target of the session creation request by the communication terminal 60. For example, the selection unit 626 selects the route from the V-SMF 620 to the H-SMF that is the transmission target of the session creation request by the communication terminal 60, among routes from the V-SMF 620 to each of a plurality of H-SMFs to each of which an identical IP address is allocated. For example, the selection unit 626, in response to the reception unit 624 receiving the session creation request by the communication terminal 60, selects the route from the V-SMF 620 to the H-SMF that is the transmission target of the session creation request by the communication terminal 60.

The transmission unit 628 transmits various types of information. For example, the transmission unit 628 transmits the various types of information to the router 27. For example, the transmission unit 628 transmits the session creation request by the communication terminal 60 to the router 27.

The transmission unit 628 transmits the various types of information to the H-SMF. For example, the transmission unit 628 transmits the session creation request by the communication terminal 60 to the H-SMF selected as the transmission target of the session creation request by the communication terminal 60 by following the route selected by the selection unit 626.

For example, the reception unit 624 receives a session creation response for the communication terminal 60 from the H-SMF. For example, the reception unit 624 receives the session creation response for the communication terminal 60 from a plurality of H-SMFs to each of which an identical IP address is allocated.

Note that the V-SMF 620 may not store the route table in the storage unit 622, and may not include the creation unit 625 and the selection unit 626. In this case, the router 27 may store the route table, and may include the creation unit 625 and the selection unit 626.

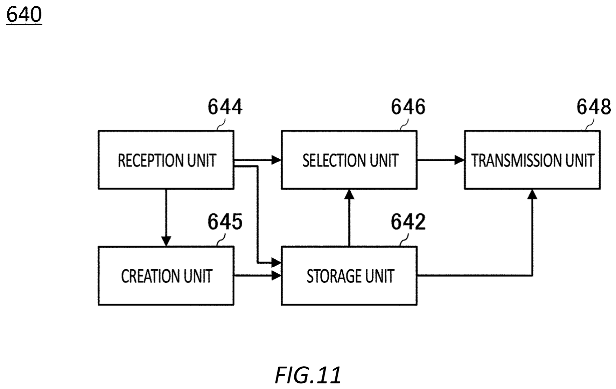

FIG. 11 schematically illustrates one example of a functional configuration of the V-UPF 640. The V-UPF 640 includes a storage unit 642, a reception unit 644, a creation unit 645, a selection unit 646, and a transmission unit 648. Note that the V-UPF 640 does not necessarily include all of these constituents.

The storage unit 642 stores various types of information. For example, the storage unit 642 stores a route table.

For example, the route table contains route information between the V-UPF 640 and the H-UPF 440. For example, the route table contains route information between the V-UPF 640 and the H-UPF 540.

The reception unit 644 receives various types of information. For example, the reception unit 644 receives the various types of information via the network 20 and the router 27. The reception unit 644 may receive the various types of information via a radio access network. The reception unit 644 may store, in the storage unit 642, the various types of information thus received.

For example, the reception unit 644 receives route information advertised by the router 23. For example, the reception unit 644 receives route information advertised by the router 25. The reception unit 644 may receive route information advertised by the IPX.

For example, the reception unit 644 receives the route information between the V-UPF 640 and the H-UPF 440. For example, the reception unit 644 receives the route information between the V-UPF 640 and the H-UPF 540.

The creation unit 645 creates a route table. For example, the creation unit 645 creates the route table based on the route information received by the reception unit 644. The creation unit 645 may store, in the storage unit 642, the route table thus created.

The selection unit 646 selects a route. For example, the selection unit 646 selects the route based on the route table stored in the storage unit 642. For example, the selection unit 646 selects the route according to the BGP best path selection algorithm. The selection unit 646 may select the route according to any other path selection algorithm.

The transmission unit 648 transmits various types of information. For example, the transmission unit 648 transmits the various types of information to the router 27. For example, the transmission unit 648, to the router 27, transmits uplink data from the communication terminal 60 received by the reception unit 644.

For example, the selection unit 646 selects a route from the V-UPF 640 to an H-UPF that is a transmission target of the uplink data from the communication terminal 60. For example, the selection unit 646 selects the route from the V-UPF 640 to the H-UPF that is the transmission target of the uplink data from the communication terminal 60, among routes from the V-UPF 640 to each of a plurality of H-UPFs for each of which a session is created with the V-UPF 640. For example, the selection unit 646, in response to the reception unit 644 receiving, from the communication terminal 60 via a gNodeB, the uplink data from the communication terminal 60, selects the route from the V-UPF 640 to the H-UPF that is the transmission target of the uplink data from the communication terminal 60. The transmission unit 648 may transmit the uplink data from the communication terminal 60 to the H-UPF that is the transmission target of the uplink data from the communication terminal 60 by following the route selected by the selection unit 646.

Note that the V-UPF 640 may not store the route table in the storage unit 642, and may not include the creation unit 645 and the selection unit 646. In this case, the router 27 may store the route table, and may include the creation unit 645 and the selection unit 646.

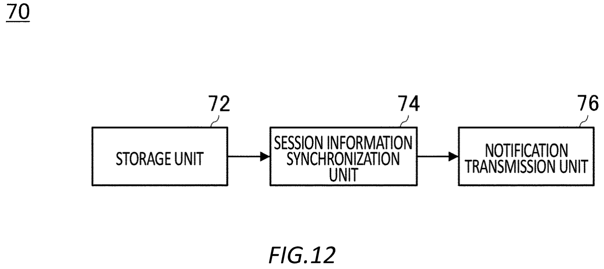

FIG. 12 schematically illustrates one example of a functional configuration of the database 70. The database 70 includes a storage unit 72, a session information synchronization unit 74, and a notification transmission unit 76. Note that the database 70 does not necessarily include all of these constituents.

The storage unit 72 stores session information on the communication terminal 60. For example, the storage unit 72 stores the session information on the communication terminal 60 registered by the H-UPF 440.

The session information synchronization unit 74 synchronizes the session information on the communication terminal 60 stored in the storage unit 72 between the database 70 corresponding to the H-UPF 440 and the database 90 corresponding to the H-UPF 540. For example, the session information synchronization unit 74 synchronizes the session information on the communication terminal 60 stored in the storage unit 72 between the database 70 and the database 90 by using a Pub/Sub scheme.

The notification transmission unit 76 transmits a notification. For example, the notification transmission unit 76 transmits the notification to the H-SMF 420. For example, the notification transmission unit 76 transmits the notification to the H-UPF 440. For example, the notification transmission unit 76 transmits the notification to the H-SMF 520. For example, the notification transmission unit 76 transmits the notification to the H-UPF 540.

For example, the notification transmission unit 76 transmits a session information notification. The notification transmission unit 76 may transmit a synchronization completion notification.

The storage unit 72 may store the session information on the communication terminal 60 synchronized between the database 70 and the database 90 by the H-SMF 420. The storage unit 72 may store the session information on the communication terminal 60 synchronized between the database 70 and the database 90 by the H-SMF 520. The storage unit 72 may store the session information on the communication terminal 60 synchronized between the database 70 and the database 90 by the database 90.

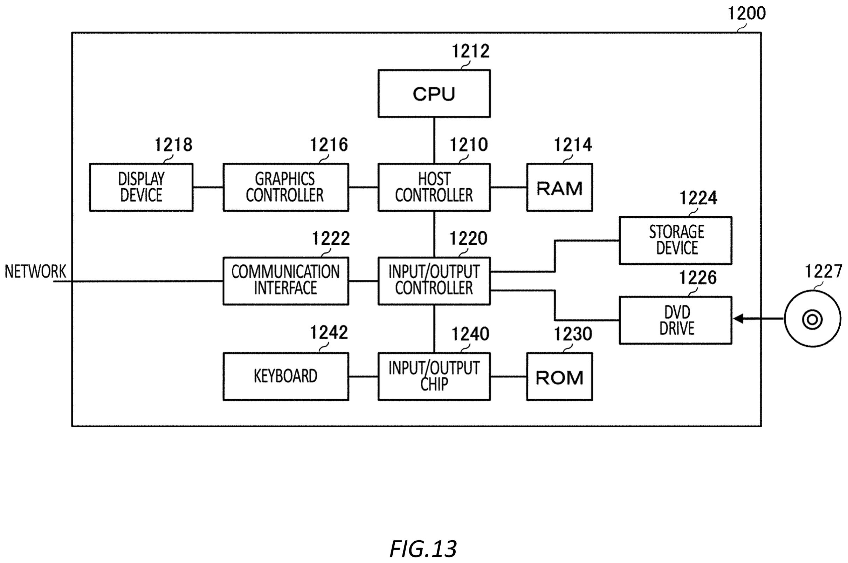

FIG. 13 schematically illustrates one example of a hardware configuration of a computer 1200 which functions as the PGW 100, the SGW 300, the database 30, the H-SMF 420, the H-UPF 440, the V-SMF 620, the V-UPF 640, or the database 70. A program installed in the computer 1200 can cause the computer 1200 to function as one or more "units" of the device according to the above-described embodiment or can cause the computer 1200 to execute operations associated with the device according to the above-described embodiment or the one or more "units" in question, and/or can cause the computer 1200 to execute a process according to the above-described embodiment or steps of the process in question. Such a program may be executed by a CPU 1212 to cause the computer 1200 to perform particular operations associated with some or all of the blocks in the flowcharts and block diagrams described herein.

The computer 1200 according to the present embodiment includes the CPU 1212, a RAM 1214, and a graphics controller 1216, which are connected to each other via a host controller 1210. The computer 1200 also includes a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes legacy input/output units such as a ROM 1230 and a keyboard 1242, which are connected to the input/output controller 1220 via an input/output chip 1240.

The CPU 1212 operates in accordance with the program stored in the ROM 1230 and the RAM 1214, thereby controlling each unit. The graphics controller 1216 acquires image data which is generated by the CPU 1212 in a frame buffer or the like provided in the RAM 1214 or in itself to cause the image data to be displayed on a display device 1218.

The communication interface 1222 communicates with other electronic devices via a network. The storage device 1224 stores a program and data used by the CPU 1212 in the computer 1200. The DVD drive 1226 reads the program or the data from the DVD-ROM 1227 or the like, and provides the storage device 1224 with the program or the data. The IC card drive reads the program and the data from an IC card, and/or writes the program and the data to the IC card.

The ROM 1230 stores therein a boot program or the like executed by the computer 1200 at the time of activation, and/or a program depending on hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage device 1224, RAM 1214, or ROM 1230, which are also examples of the computer-readable storage medium, and executed by the CPU 1212. Information processing written in this program is read by the computer 1200, and provides cooperation between the programs and the various types of hardware resources described above. A device or method may be configured by achieving the operation or processing of information in accordance with the usage of the computer 1200.

For example, when a communication is performed between the computer 1200 and an external device, the CPU 1212 may execute a communication program loaded in the RAM 1214 and, based on processing written in the communication program, instruct the communication interface 1222 to perform communication processing. The communication interface 1222, under control of the CPU 1212, reads transmission data stored on a transmission buffer region provided in a recording medium such as the RAM 1214, the storage device 1224, the DVD-ROM 1227, or the IC card to transmit the transmission data thus read to a network, or writes reception data received from the network to a reception buffer region or the like provided on the recording medium.

In addition, the CPU 1212 may cause all or a necessary portion of a file or a database, which has been stored in an external recording medium such as the storage device 1224, the DVD drive 1226 (DVD-ROM 1227), the IC card or the like, to be read into the RAM 1214, thereby executing various types of processing on the data on the RAM 1214. Next, the CPU 1212 may write back the data thus processed into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the program, to write back results to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries in question, and read the attribute value of the second attribute stored in the entry in question, thereby acquiring the attribute value of the second attribute associated with the first attribute that meets a predetermined condition.

The program or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiment may represent steps of a process in which operations are executed or "units" of a device responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon includes a product including an instruction that may be executed in order to provide means for executing an operation designated by a flowchart or a block diagram. Examples of the computer-readable storage medium may include an electronic storage medium, a magnetic storage medium, an optical storage medium, an electromagnetic storage medium, a semiconductor storage medium, and the like. A more specific example of the computer-readable storage medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a BLU-RAY (registered trademark) disk, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as SMALLTALK (registered trademark), JAVA (registered trademark), C++, or the like, and a conventional procedural programming language such as a "C" programming language or a similar programming language.

The computer-readable instruction may be provided to a processor of a general purpose computer, a special purpose computer or another programmable data processing apparatus, or a programmable circuit locally or via a local area network (LAN), a wide area network (WAN) such as the Internet or the like in order that the processor of the general purpose computer, the special purpose computer or the another programmable data processing apparatus, or the programmable circuit executes the computer-readable instruction in question to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be made to the above-described embodiments. It is also apparent from the scope of the claims that such alterations or improvements made to the embodiments can fall within the technical scope of the present invention.

It should be noted that each process such as operations, procedures, steps, and stages executed by a device, a system, a program, and a method shown in the claims, the description, and the drawings can be achieved in any order as long as the order is not explicitly indicated by "prior to," "before," or the like and as long as the output from the previous process is not used in a later process. Even if an operation flow is described using phrases such as "first" or "next" in the claims, the description, and the drawings, it does not necessarily mean that the processes must be executed in this order.

### EXPLANATION OF REFERENCES

10: system;
20: network;
22: router;
23: router;
24: router;
25: router;
26: router;
27: router;
30: database;
32: storage unit;
34: session information synchronization unit;
36: notification transmission unit;
40: PDN;
50: database;
60: communication terminal;
70: database;
72: storage unit;
74: session information synchronization unit;
76: notification transmission unit;
90: database;
100: PGW;
102: request reception unit;
104: session information creation unit;
106: registration unit;
108: session information synchronization unit;
110: notification reception unit;
112: communication tunnel establishment unit;
120: PGW-C;
140: PGW-U;
200: PGW;
220: PGW-C;
240: PGW-U;
300: SGW;
302: storage unit;
304: reception unit;
305: creation unit;
306: selection unit;
308: transmission unit;
320: SGW-C;
340: SGW-U;
420: H-SMF;
422: request reception unit;
424: session information creation unit;
426: registration unit;
428: session information synchronization unit;
430: notification reception unit;
432: communication tunnel establishment unit;
440: H-UPF;
442: notification reception unit;
444: request reception unit;
446: communication tunnel establishment unit;
448: response transmission unit;
520: H-SMF;
540: H-UPF;
620: V-SMF;
622: storage unit;
624: reception unit;
625: creation unit;
626: selection unit;
628: transmission unit;
640: V-UPF;
642: storage unit;
644: reception unit;
645: creation unit;
646: selection unit;
648: transmission unit;
1200: computer;
1210: host controller;
1212: CPU;
1214: RAM;
1216: graphics controller;
1218: display device;
1220: input/output controller;
1222: communication interface;
1224: storage device;
1226: DVD drive;
1227: DVD-ROM;
1230: ROM;
1240: input/output chip; and
1242: keyboard.

## Claims

1. A system comprising:
a first PGW (Packet data network Gateway);
a second PGW which is located in a network having an ASN (Autonomous System number) different from an ASN of a network in which the first PGW is located and to which an IP (Internet Protocol) address identical to an IP address allocated to the first PGW is allocated;
a first storage unit corresponding to the first PGW; and
a second storage unit corresponding to the second PGW,
wherein the first PGW comprises:
a request reception unit which receives, from an SGW (Serving Gateway), a session creation request by a communication terminal which requests to create a session with a PDN (Packet Data Network);
a session information creation unit which, in response to the request reception unit receiving the session creation request, creates session information on the communication terminal containing an IP address of the communication terminal, the IP address of the first PGW, TEIDs (Tunnel Endpoint IDentifiers) allocated to a communication tunnel for the first PGW and to a communication tunnel for the second PGW, an IP address of the SGW, and a TEID allocated to a communication tunnel for the SGW; and
a registration unit which registers, in the first storage unit, the session information created by the session information creation unit,
wherein the system further comprises a session information synchronization unit which synchronizes the session information registered in the first storage unit by the registration unit between the first storage unit and the second storage unit,
wherein the first PGW further comprises a first communication tunnel establishment unit which, based on the session information which is synchronized between the first storage unit and the second storage unit by the session information synchronization unit and which is stored in the first storage unit, establishes a communication tunnel between the first PGW and the SGW in order to create the session for the communication terminal with the PDN, and
wherein the second PGW comprises a second communication tunnel establishment unit which, based on the session information which is synchronized between the second storage unit and the first storage unit by the session information synchronization unit and which is stored in the second storage unit, establishes a communication tunnel between the second PGW and the SGW in order to create the session for the communication terminal with the PDN.

2. The system according to claim 1,
wherein the first PGW is separated into a first PGW-C (PGW-Control plane function) and a first PGW-U (PGW-User plane function), and an IP address different from an IP address allocated to the first PGW-C is allocated to the first PGW-U,
wherein the second PGW is separated into a second PGW-C and a second PGW-U, an IP address identical to the IP address allocated to the first PGW-C is allocated to the second PGW-C, and an IP address identical to the IP address allocated to the first PGW-U is allocated to the second PGW-U,
wherein the IP address of the first PGW comprises the IP address of the first PGW-C and the IP address of the first PGW-U,
wherein the TEIDs allocated to the communication tunnel for the first PGW and to the communication tunnel for the second PGW comprise TEIDs allocated to a communication tunnel for the first PGW-C and to a communication tunnel for the second PGW-C, and TEIDs which are allocated to a communication tunnel for the first PGW-U and to a communication tunnel for the second PGW-U and which are different from the TEIDs allocated to the communication tunnel for the first PGW-C and to the communication tunnel for the second PGW-C,
wherein the IP address of the SGW separated into an SGW-C (SGW-Control plane function) and an SGW-U (SGW-User plane function) comprises an IP address of the SGW-C and an IP address of the SGW-U different from the IP address of the SGW-C,
wherein the TEID allocated to the communication tunnel for the SGW comprises a TEID allocated to a communication tunnel for the SGW-C, and a TEID which is allocated to a communication tunnel for the SGW-U and which is different from the TEID allocated to the communication tunnel for the SGW-C,
wherein the first communication tunnel establishment unit establishes the communication tunnel between the first PGW and the SGW by establishing a communication tunnel between the first PGW-C and the SGW-C and a communication tunnel between the first PGW-U and the SGW-U, and
wherein the second communication tunnel establishment unit establishes the communication tunnel between the second PGW and the SGW by establishing a communication tunnel between the second PGW-C and the SGW-C and a communication tunnel between the second PGW-U and the SGW-U.

3. The system according to claim 1 or 2, further comprising:
a selection unit which selects a route from the SGW to a PGW that is a transmission target of the session creation request according to a BGP (Border Gateway Protocol) best path selection algorithm; and
a transmission unit which transmits the session creation request to the first PGW by following the route selected by the selection unit.

4. The system according to any one of claims 1 to 3, wherein the first PGW is located in the network of a first country, and the second PGW is located in the network of a second country different from the first country.

5. A PGW comprising:
a request reception unit which receives, from an SGW, a session creation request by a communication terminal which requests to create a session with a PDN;
a session information creation unit which, in response to the request reception unit receiving the session creation request, creates session information on the communication terminal containing an IP address of the communication terminal, an IP address of the PGW, TEIDs allocated to a communication tunnel for the PGW and to a communication tunnel for another PGW which is located in a network having an ASN different from an ASN of a network in which the PGW is located and to which an IP address identical to the IP address of the PGW is allocated, an IP address of the SGW, and a TEID allocated to a communication tunnel for the SGW;
a registration unit which registers, in a first storage unit corresponding to the PGW, the session information created by the session information creation unit;
a session information synchronization unit which synchronizes the session information registered in the first storage unit by the registration unit between the first storage unit and a second storage unit corresponding to the another PGW; and
a communication tunnel establishment unit which, based on the session information which is synchronized between the first storage unit and the second storage unit by the session information synchronization unit and which is stored in the first storage unit, establishes a communication tunnel between the PGW and the SGW in order to create the session for the communication terminal with the PDN.

6. An information processing device comprising:
a first storage unit corresponding to a first PGW, which stores session information on a communication terminal which requests to create a session with a PDN, containing an IP address of the communication terminal, an IP address of the first PGW, TEIDs allocated to a communication tunnel for the first PGW and to a communication tunnel for a second PGW which is located in a network having an ASN different from an ASN of a network in which the first PGW is located and to which an IP address identical to the IP address of the first PGW is allocated, an IP address of an SGW for which a communication tunnel to the first PGW is established, and a TEID allocated to a communication tunnel for the SGW; and
a session information synchronization unit which synchronizes the session information stored in the first storage unit between the first storage unit and a second storage unit corresponding to the second PGW.

7. A system comprising:
a first SMF (Session Management Function);
a first UPF (User Plane Function) located in a network in which the first SMF is located;
a second SMF which is located in a network having an ASN different from an ASN of the network in which the first SMF is located;
a second UPF which is located in the network in which the second SMF is located and to which an IP address identical to an IP address allocated to the first UPF is allocated;
a first storage unit corresponding to the first UPF; and
a second storage unit corresponding to the second UPF,
wherein the first SMF comprises:
a request reception unit which receives, from a third SMF, a session creation request by a communication terminal which requests to create a session with a PDN;
a session information creation unit which, in response to the request reception unit receiving the session creation request, creates session information on the communication terminal containing an IP address of the communication terminal, the IP address of the first UPF, TEIDs allocated to a communication tunnel for the first UPF and to a communication tunnel for the second UPF, an IP address of a third UPF located in a network in which the third SMF is located, and a TEID allocated to a communication tunnel for the third UPF; and
a registration unit which registers, in the first storage unit, the session information created by the session information creation unit,
wherein the system further comprises a session information synchronization unit which synchronizes the session information registered in the first storage unit by the registration unit between the first storage unit and the second storage unit,
wherein the first SMF further comprises a first communication tunnel establishment unit which, based on the session information which is synchronized between the first storage unit and the second storage unit by the session information synchronization unit and which is stored in the first storage unit, causes the first UPF to establish a communication tunnel between the first UPF and the third UPF in order to create the session for the communication terminal with the PDN, and
wherein the second SMF comprises a second communication tunnel establishment unit which, based on the session information which is synchronized between the second storage unit and the first storage unit by the session information synchronization unit and which is stored in the second storage unit, causes the second UPF to establish a communication tunnel between the second UPF and the third UPF in order to create the session for the communication terminal with the PDN.

8. An SMF comprising:
a request reception unit which receives, from another SMF, a session creation request by a communication terminal which requests to create a session with a PDN;
a session information creation unit which, in response to the request reception unit receiving the session creation request, creates session information on the communication terminal containing an IP address of the communication terminal, an IP address of a first UPF located in a network in which the SMF is located, TEIDs allocated to a communication tunnel for the first UPF and to a communication tunnel for a second UPF which is located in a network having an ASN different from an ASN of the network in which the SMF is located and to which an IP address identical to the IP address allocated to the first UPF is allocated, an IP address of a third UPF located in a network in which the another SMF is located, and a TEID allocated to a communication tunnel for the third UPF;
a registration unit which registers, in a first storage unit corresponding to the first UPF, the session information created by the session information creation unit;
a session information synchronization unit which synchronizes the session information registered in the first storage unit by the registration unit between the first storage unit and a second storage unit corresponding to the second UPF; and
a communication tunnel establishment unit which, based on the session information which is synchronized between the first storage unit and the second storage unit by the session information synchronization unit and which is stored in the first storage unit, causes the first UPF to establish a communication tunnel between the first UPF and the third UPF in order to create the session for the communication terminal with the PDN.

9. An information processing device comprising:
a first storage unit corresponding to a first UPF, which stores session information on a communication terminal which requests to create a session with a PDN, containing an IP address of the communication terminal, an IP address of the first UPF, TEIDs allocated to a communication tunnel for the first UPF and to a communication tunnel for a second UPF which is located in a network having an ASN different from an ASN of a network in which the first UPF is located and to which an IP address identical to the IP address allocated to the first UPF is allocated, an IP address of a third UPF for which a communication tunnel to the first UPF is established, and a TEID allocated to a communication tunnel for the third UPF; and
a session information synchronization unit which synchronizes the session information stored in the first storage unit between the first storage unit and a second storage unit corresponding to the second UPF.

10. A method performed by a PGW, comprising:
receiving a request by receiving, from an SGW, a session creation request by a communication terminal which requests to create a session with a PDN;
in response to receiving the session creation request in the receiving the request, creating session information on the communication terminal containing an IP address of the communication terminal, an IP address of the PGW, TEIDs allocated to a communication tunnel for the PGW and to a communication tunnel for another PGW which is located in a network having an ASN different from an ASN of a network in which the PGW is located and to which an IP address identical to the IP address of the PGW is allocated, an IP address of the SGW, and a TEID allocated to a communication tunnel for the SGW;
registering, in a first storage unit corresponding to the PGW, the session information created in the creating the session information;
synchronizing the session information registered in the first storage unit in the registering, between the first storage unit and a second storage unit corresponding to the another PGW; and
based on the session information which is synchronized between the first storage unit and the second storage unit in the synchronizing the session information and which is stored in the first storage unit, establishing a communication tunnel between the PGW and the SGW in order to create the session for the communication terminal with the PDN.

11. A method performed by a computer, comprising:
storing, in a first storage unit corresponding to a first PGW, session information on a communication terminal which requests to create a session with a PDN, containing an IP address of the communication terminal, an IP address of the first PGW, TEIDs allocated to a communication tunnel for the first PGW and to a communication tunnel for a second PGW which is located in a network having an ASN different from an ASN of a network in which the first PGW is located and to which an IP address identical to the IP address of the first PGW is allocated, an IP address of an SGW for which a communication tunnel to the first PGW is established, and a TEID allocated to a communication tunnel for the SGW; and
synchronizing the session information stored in the first storage unit in the storing, between the first storage unit and a second storage unit corresponding to the second PGW.

12. A method performed by an SMF, comprising:
receiving a request by receiving, from another SMF, a session creation request by a communication terminal which requests to create a session with a PDN;
in response to receiving the session creation request in the receiving the request, creating session information on the communication terminal containing an IP address of the communication terminal, an IP address of a first UPF located in a network in which the SMF is located, TEIDs allocated to a communication tunnel for the first UPF and to a communication tunnel for a second UPF which is located in a network having an ASN different from an ASN of the network in which the SMF is located and to which an IP address identical to an IP address allocated to the first UPF is allocated, an IP address of a third UPF located in a network in which the another SMF is located, and a TEID allocated to a communication tunnel for the third UPF;
registering, in a first storage unit corresponding to the first UPF, the session information created in the creating the session information;
synchronizing the session information registered in the first storage unit in the registering, between the first storage unit and a second storage unit corresponding to the second UPF; and
based on the session information which is synchronized between the first storage unit and the second storage unit in the synchronizing the session information and which is stored in the first storage unit, establishing a communication tunnel by causing the first UPF to establish a communication tunnel between the first UPF and the third UPF in order to create the session for the communication terminal with the PDN.

13. A method performed by a computer, comprising:
storing, in a first storage unit corresponding to a first UPF, session information on a communication terminal which requests to create a session with a PDN, containing an IP address of the communication terminal, an IP address of the first UPF, TEIDs allocated to a communication tunnel for the first UPF and to a communication tunnel for a second UPF which is located in a network having an ASN different from an ASN of a network in which the first UPF is located and to which an IP address identical to the IP address allocated to the first UPF is allocated, an IP address of an third UPF for which a communication tunnel to the first UPF is established, and a TEID allocated to a communication tunnel for the third UPF; and
synchronizing the session information stored in the first storage unit in the storing, between the first storage unit and a second storage unit corresponding to the second UPF.
